(19) Europäisches Patentamt
European Patent Office
Office européen des brevets

(11) **EP 4 693 935 A2**

(12) **EUROPEAN PATENT APPLICATION**
published in accordance with Art. 153(4) EPC

(43) Date of publication:
**11.02.2026 Bulletin 2026/07**

(21) Application number: **24781277.9**

(22) Date of filing: **28.03.2024**

(51) International Patent Classification (IPC):
*H04B 7/06* (2006.01)   *H04B 7/0456* (2017.01)
*H04B 7/0404* (2017.01)   *H04B 7/0413* (2017.01)
*H04W 72/12* (2023.01)   *H04W 72/232* (2023.01)
*H04W 52/14* (2009.01)   *H04W 52/32* (2009.01)
*H04W 52/36* (2009.01)   *H04W 52/42* (2009.01)

(52) Cooperative Patent Classification (CPC):
**H04B 7/0404; H04B 7/0413; H04B 7/0456;
H04B 7/06; H04W 52/14; H04W 52/32;
H04W 52/36; H04W 52/42; H04W 72/12;
H04W 72/232**

(86) International application number:
**PCT/KR2024/003995**

(87) International publication number:
**WO 2024/205287 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023   KR 20230043051**

(71) Applicant: **LG Electronics Inc.
Yeongdeungpo-gu
Seoul 07336 (KR)**

(72) Inventors:
• **KIM, Hyungtae**
  **Seoul 06772 (KR)**
• **KANG, Jiwon**
  **Seoul 06772 (KR)**
• **PARK, Haewook**
  **Seoul 06772 (KR)**

(74) Representative: **Plasseraud IP
104 Rue de Richelieu
CS92104
75080 Paris Cedex 02 (FR)**

(54) **METHOD AND DEVICE FOR PERFORMING UPLINK TRANSMISSION AND RECEPTION IN WIRELESS COMMUNICATION SYSTEM**

(57)    A method and a device for performing uplink transmission and reception in a wireless communication system are disclosed. A method performed by a terminal in a wireless communication system according to an embodiment of the present disclosure may comprise the steps of: reporting, to a base station, capability information associated with full power transmission; receiving, from the base station, control information including information on at least one precoding matrix for a data channel; and transmitting, to the base station, the data channel on the basis of the at least one precoding matrix. Here, the capability information may include information about a first precoding matrix set and information about a second precoding matrix set for full power transmission of the data channel. At this time, the first precoding matrix set may be associated with a first uplink transmission scheme based on one sounding reference signal (SRS) resource set, and the second precoding matrix set may be associated with a second uplink transmission scheme based on at least two SRS resource sets.

FIG.9

## Description

[TECHNICAL FIELD]

The present disclosure relates to a wireless communication system, and more specifically, to a method and device for performing uplink transmission and reception in a wireless communication system.

[BACKGROUND ART]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and device for performing uplink transmission and reception in a wireless communication system.

The technical object of the present disclosure is to provide a method and device for indicating a precoding matrix indicator (PMI) for uplink transmission and applying a full power Tx mode related thereto for a terminal supporting a method in which M panels share N ports (e.g., digital ports).

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may comprise: reporting, to a base station, capability information related to full power transmission; receiving, from the base station, control information including information for at least one precoding matrix for a data channel; and transmitting, to the base station, the data channel based on the at least one precoding matrix. Herein, the capability information may include information for a first precoding matrix set and information for a second precoding matrix set for full power transmission of the data channel. In this case, the first precoding matrix set may relate to a first uplink transmission scheme based on one sounding reference signal (SRS) resource set, and the second precoding matrix set may relate to a second uplink transmission scheme based on at least two SRS resource sets.

A method performed by a base station in a wireless communication system according to an additional aspect of the present disclosure may comprise: receiving, from a user equipment, a report of capability information related to full power transmission; transmitting, to the UE, control information including information for at least one precoding matrix for a data channel; and receiving, from the UE, the data channel transmitted based on the at least one precoding matrix. Herein, the capability information may include information for a first precoding matrix set and information for a second precoding matrix set for full power transmission of the data channel. In this case, the first precoding matrix set may relate to a first uplink transmission scheme based on one sounding reference signal (SRS) resource set, and the second precoding matrix set may relate to a second uplink transmission scheme based on at least two SRS resource sets.

[Technical Effects]

According to an embodiment of the present disclosure, a method and device for performing uplink transmission and reception in a wireless communication system may be provided.

According to an embodiment of the present disclosure, a method and apparatus for indicating a precoding matrix indicator (PMI) for uplink transmission and applying a full power Tx mode related thereto for a terminal supporting a method in which M panels share N ports (e.g., digital ports) may be provided.

According to an embodiment of the present disclosure, in a simultaneous transmission across multi-panel (STxMP) implementation in which a total of N ports are divided, there is a technical effect of simplifying port-to-panel mapping by restricting a PMI set per panel, and introducing an additional PMI to minimize performance degradation due to PMI limitation.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a multiple Transmission and Reception Point (TRP) transmission scheme in a wireless communication system to which the present disclosure may be applied.

FIG. 8 illustrates a structure for sharing ports between panels to which the present disclosure may be applied.

FIG. 9 is a diagram illustrating the operation of a user equipment for a method for performing uplink transmission according to an embodiment of the present disclosure.

FIG. 10 is a diagram illustrating the operation of a base station for a method for receiving uplink transmission according to an embodiment of the present disclosure.

FIG. 11 is a diagram which illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access

IFFT: inverse fast Fourier transform

L1-RSRP: Layer 1 reference signal received power

L1-RSRQ: Layer 1 reference signal received quality

MAC: medium access control

NZP: non-zero power

OFDM: orthogonal frequency division multiplexing

PDCCH: physical downlink control channel

PDSCH: physical downlink shared channel

PMI: precoding matrix indicator

RE: resource element

RI: Rank indicator

RRC: radio resource control

RSSI: received signal strength indicator

Rx: Reception

QCL: quasi co-location

SINR: signal to interference and noise ratio

SSB (or SS/PBCH block): Synchronization signal block (including PSS (primary synchronization signal), SSS (secondary synchronization signal) and PBCH (physical broadcast channel))

TDM: time division multiplexing

TRP: transmission and reception point

TRS: tracking reference signal

Tx: transmission

UE: user equipment

ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

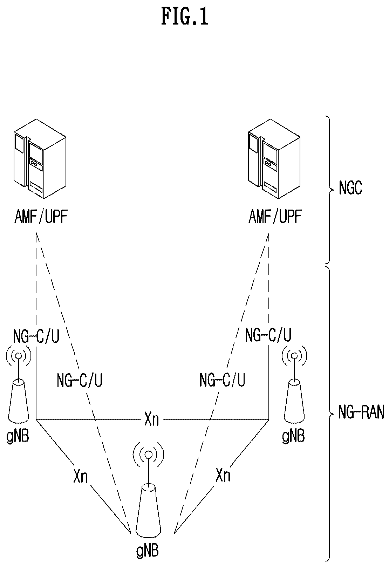

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

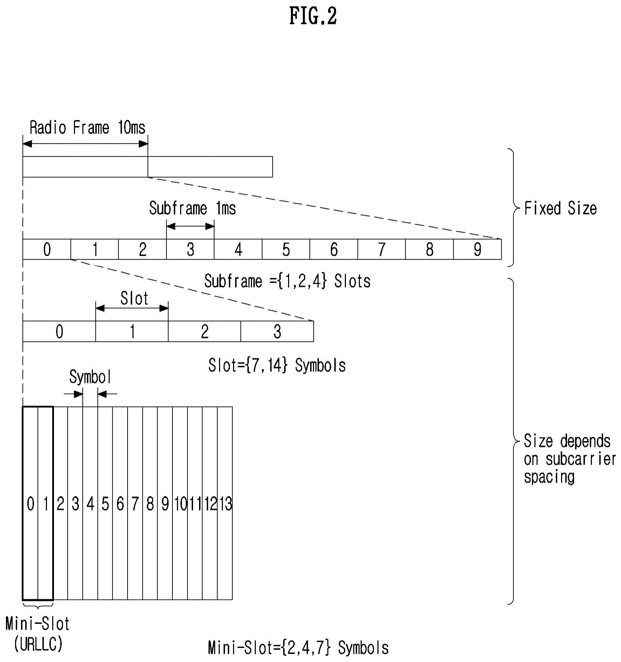

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f=1/(\Delta f_{max}N_f/100) \cdot T_c=10ms$. Here, a radio frame is configured with 10 subframes having a duration of $T_{sf}=(\Delta f_{max}N_f/1000) \cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu=2$ (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

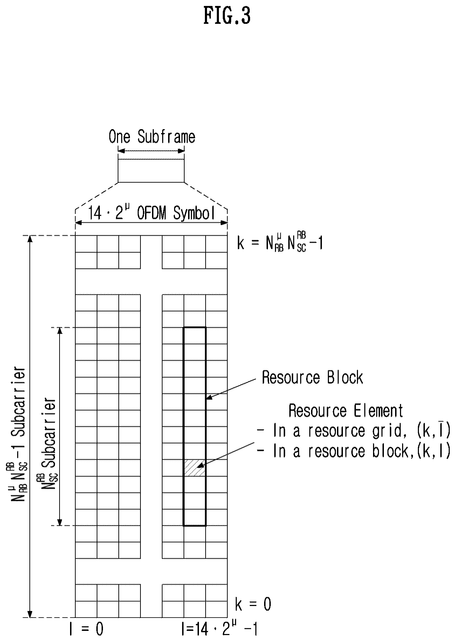

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

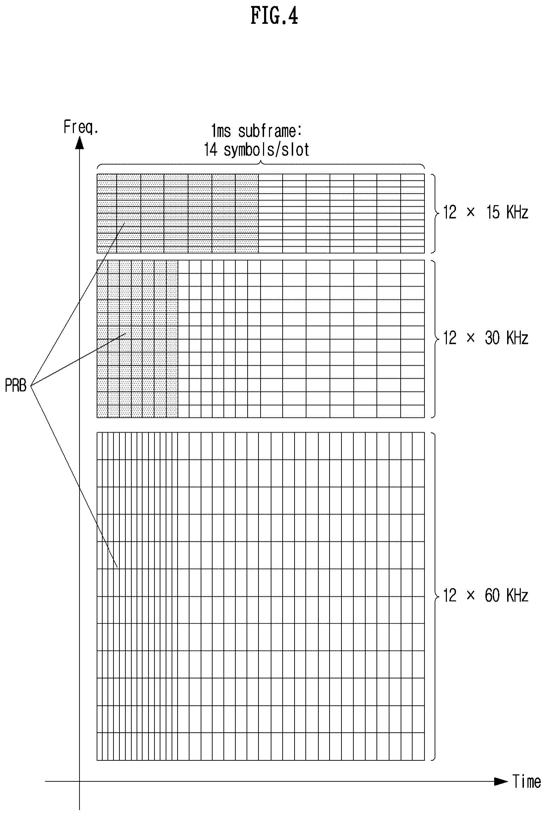

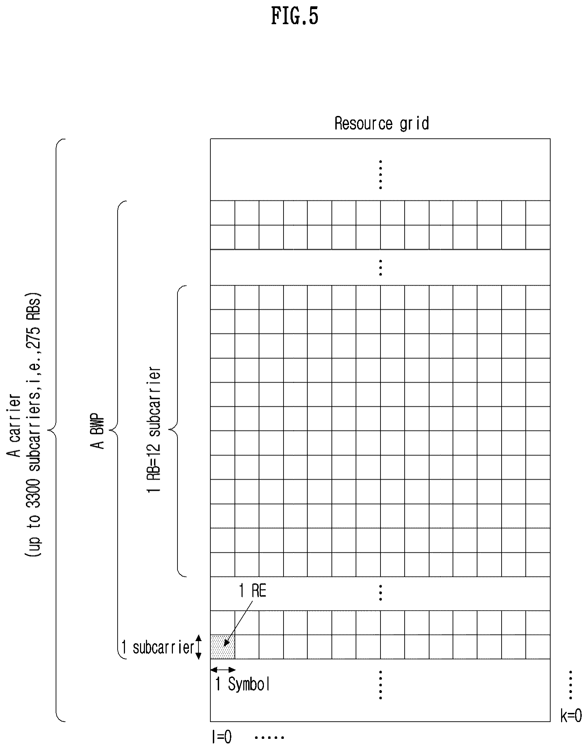

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

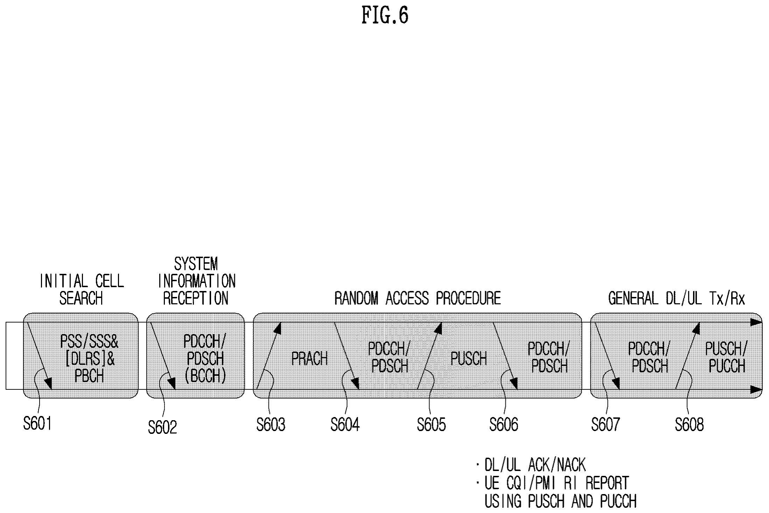

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
| --- | --- |
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

When HARQ-ACK corresponding to a PDSCH carrying an activation command is transmitted in a slot n, mapping indicated between a TCI state and a codepoint of a DCI field 'Transmission Configuration Indication' may be applied by starting from a slot $n+3N_{slot}^{subframe,\mu}+1$. After UE receives an initial higher layer configuration for TCI states before receiving an activation command, UE may assume for QCL-TypeA, and if applicable, for QCL-TypeD that a DMRS port of a PDSCH of a serving cell is quasi-colocated with a SS/PBCH block determined in an initial access process.

When a higher layer parameter (e.g., tci-PresentInDCI) indicating whether there is a TCI field in DCI configured for UE is set to be enabled for a CORESET scheduling a PDSCH, UE may assume that there is a TCI field in DCI format 1_1 of a PDCCH transmitted in a corresponding CORESET. When tci-PresentInDCI is not configured for a CORESET scheduling a PDSCH or when a PDSCH is scheduled by DCI format 1_0 and a time offset between reception of DL DCI and a corresponding PDSCH is equal to or greater than a predetermined threshold (e.g., timeDurationForQCL), in order to determine a PDSCH antenna port QCL, UE may assume that a TCI state or a QCL assumption for a PDSCH is the same as a TCI state or a QCL assumption applied to a CORESET used for PDCCH transmission. Here, the predetermined threshold may be based on reported UE capability.

When a parameter tci-PresentInDCI is set to be enabled, a TCI field in DCI in a scheduling CC (component carrier) may indicate an activated TCI state of a scheduled CC or a DL BWP. When a PDSCH is scheduled by DCI format 1_1, UE may use a TCI-state according to a value of a "Transmission Configuration Indication' field of a detected PDCCH having DCI to determine a PDSCH antenna port QCL.

When a time offset between reception of DL DCI and a corresponding PDSCH is equal to or greater than a predetermined threshold (e.g., timeDurationForQCL), UE may assume that a DMRS port of a PDSCH of a serving cell is quasi-colocated with RS(s) in a TCI state for QCL type parameter(s) given by an indicated TCI state.

When a single slot PDSCH is configured for UE, an indicated TCI state may be based on an activated TCI state of a slot having a scheduled PDSCH.

When multiple-slot PDSCHs are configured for UE, an indicated TCI state may be based on an activated TCI state of a first slot having a scheduled PDSCH and UE may expect that activated TCI states across slots having a scheduled PDSCH are the same.

When a CORESET associated with a search space set for cross-carrier scheduling is configured for UE, UE may expect that a tci-PresentInDCI parameter is set to be enabled for a corresponding CORESET. When one or more TCI states are configured for a serving cell scheduled by a search space set including QCL-TypeD, UE may expect that a time offset between reception of a PDCCH detected in the search space set and a corresponding PDSCH is equal to or greater than a predetermined threshold (e.g., timeDurationForQCL).

For both of a case in which a parameter tci-PresentInDCI is set to be enabled and a case in which tci-PresentInDCI is not configured in a RRC connected mode, when a time offset between reception of DL DCI and a corresponding PDSCH is less than a predetermined threshold (e.g., timeDurationForQCL), UE may assume that a DMRS port of a PDSCH of a serving cell is quasi-colocated with RS(s) for QCL parameter(s) used for PDCCH QCL indication of a CORESET associated with a monitored search space having the lowest CORESET-ID in the latest slot where one or more CORESETs in an activated BWP of a serving cell is monitored by UE.

In this case, when QCL-TypeD of a PDSCH DMRS is different from QCL-TypeD of a PDCCH DMRS and they are overlapped in at least one symbol, UE may expect that reception of a PDCCH associated with a corresponding CORESET will be prioritized. It may be also applied to intra-band CA (carrier aggregation) (when a PDSCH and a CORESET exist in a different CC). When any of configured TCI states does not include QCL-TypeD, a different QCL assumption may be obtained from TCI states indicated for a scheduled PDSCH, regardless of a time offset between reception of DL DCI and a corresponding PDSCH.

For a periodic CSI-RS resource of configured NZP-CSI-RS-ResourceSet including a higher layer parameter trs-Info, UE may expect a TCI state to indicate one of the following QCL type(s).

- QCL-TypeC with a SS/PBCH block, and if applicable, QCL-TypeD with the same SS/PBCH block, or
- QCL-TypeC with a SS/PBCH block, and if applicable, QCL-TypeD with a CSI-RS resource in configured NZP-CSI-RS-ResourceSet including a higher layer parameter repetition

For an aperiodic CSI-RS resource of configured NZP-CSI-RS-ResourceSet including a higher layer parameter trs-Info, UE may expect a TCI state to indicate QCL-TypeA with a periodic CSI-RS resource of NZP-CSI-RS-ResourceSet including a higher layer parameter trs-Info, and if applicable, QCL-TypeD with the same periodic CSI-RS resource.

*For a CSI-RS resource of NZP-CSI-RS-ResourceSet configured without a higher layer parameter trs-Info and without a higher layer parameter repetition, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or
- QCL-TypeA with a CSI-RS resource of configured NZP-CSI-RS-ResourceSet including a higher layer parameter trs-Info, and if applicable, QCL-TypeD with a SS/PBCH block, or

    QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or

    when QCL-TypeD is not applicable, QCL-TypeB with a CSI-RS resource in configured NZP-CSI-RS-ResourceSet including a higher layer parameter trs-Info.

For a CSI-RS resource of configured NZP-CSI-RS-ResourceSet including a higher layer parameter repetition, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or
- QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or

    QCL-TypeC with a SS/PBCH block, and if applicable, QCL-TypeD with the same SS/PBCH block.

For a DMRS of a PDCCH, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or

    QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or

    QCL-TypeA with a CSI-RS resource of NZP-CSI-RS-ResourceSet configured without a higher layer parameter trs-Info and without a higher layer parameter repetition, and if applicable, QCL-TypeD with the same CSI-RS resource.

For a DMRS of a PDSCH, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or

- QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or
- QCL-TypeA with a CSI-RS resource of NZP-CSI-RS-ResourceSet configured without a higher layer parameter trs-Info and without a higher layer parameter repetition, and if applicable, QCL-TypeD with the same CSI-RS resource.

Multiple TRP (M-TRP) related operation

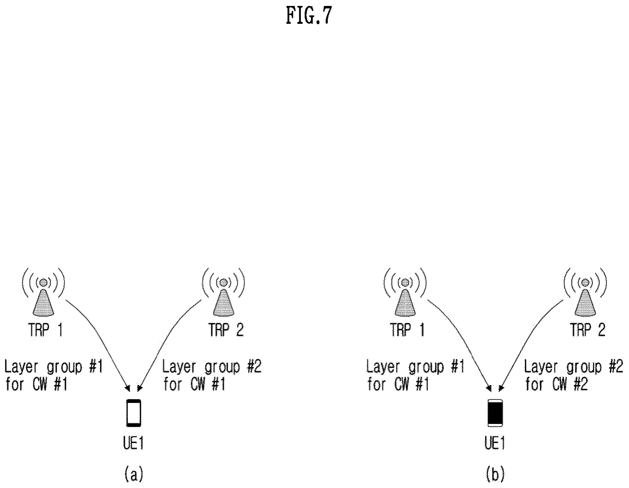

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be extended and applied to a frequency division multiplexing (FDM) method based on different frequency domain resources (e.g., RB/PRB (set), etc.) and/or a time division multiplexing (TDM) method based on different time domain resources (e.g., slots, symbols, sub-symbols, etc.).

Regarding a method for multiple TRPs based URLLC scheduled by single DCI, the following methods are discussed.

1) Method 1 (SDM): Time and frequency resource allocation is overlapped and n (n<=Ns) TCI states in a single slot

1-a) Method 1a.

- The same TB is transmitted in one layer or layer set at each transmission time (occasion) and each layer or each layer set is associated with one TCI and one set of DMRS port(s).
- A single codeword having one RV is used in all spatial layers or all layer sets. With regard to UE, different coded bits are mapped to a different layer or layer set by using the same mapping rule

1-b) Method 1b

- The same TB is transmitted in one layer or layer set at each transmission time (occasion) and each layer or each layer set is associated with one TCI and one set of DMRS port(s).
- A single codeword having one RV is used in each spatial layer or each layer set. RV(s) corresponding to each spatial layer or each layer set may be the same or different.

1-c) Method 1c

The same TB having one DMRS port associated with multiple TCI state indexes is transmitted in one layer at one transmission time (occasion) or the same TB having multiple DMRS ports one-to-one associated with multiple TCI state indexes is transmitted in one layer.
In case of the above-described method 1a and 1c, the same MCS is applied to all layers or all layer sets.

2) Method 2 (FDM): Frequency resource allocation is not overlapped and n (n<=Nf) TCI states in a single slot

- Each non-overlapping frequency resource allocation is associated with one TCI state.

The same single/multiple DMRS port(s) are associated with all non-overlapping frequency resource allocation.

2-a) Method 2a

- A single codeword having one RV is used for all resource allocation. With regard to UE, common RB matching (mapping of a codeword to a layer) is applied to all resource allocation.

2-b) Method 2b

- A single codeword having one RV is used for each non-overlapping frequency resource allocation. A RV corresponding to each non-overlapping frequency resource allocation may be the same or different.

For the above-described method 2a, the same MCS is applied to all non-overlapping frequency resource allocation.

3) Method 3 (TDM): Time resource allocation is not overlapped and n (n<=Ntl) TCI states in a single slot

- Each transmission time (occasion) of a TB has time granularity of a mini-slot and has one TCI and one RV.
- A common MCS is used with a single or multiple DMRS port(s) at all transmission time (occasion) in a slot.
- A RV/TCI may be the same or different at a different transmission time (occasion).

4) Method 4 (TDM): n (n<=Nt2) TCI states in K (n<=K) different slots

- Each transmission time (occasion) of a TB has one TCI and one RV.
- All transmission time (occasion) across K slots uses a common MCS with a single or multiple DMRS port(s).
- A RV/TCI may be the same or different at a different transmission time (occasion).

Downlink multiple TRP (M-TRP) URLLC transmission operation

DL MTRP URLLC transmission method means that multiple TRPs transmit the same data/DCI by using a different space(e.g., layer, port)/time/frequency resource. For example, TRP 1 transmits the specific data/DCI in resource 1 and TRP 2 transmits the specific data/DCI(i.e., same data/DCI) in resource 2
UE configured with a DL MTRP-URLLC transmission method receives the same data/DCI by using a different layer/time/frequency resource. Here, UE tmay receive an indication of the QCL RS/type (i.e., DL TCI state) used in the space/time/frequency resource for receiving the corresponding data/DCI from the base station.
For example, when the data/DCI is received in resource 1 and resource 2, a DL TCI state used in resource 1 and a DL TCI state used in resource 2 may be indicated. UE may achieve high reliability because it receives the data/DCI through resource 1 and resource 2. Such DL MTRP URLLC may be applied to a PDSCH/a PDCCH.

UL MTRP-URLLC transmission method means that multiple TRPs receive the same data/UCI from any UE by using a different space/time/frequency resource. For example, TRP 1 may receive the same data/DCI from UE in resource 1 and TRP 2 may receive the same data/DCI from UE in resource 2. And, TRP 1 and TRP 2 may share data/UCI received from the UE through a backhaul link (connected between TRPs).

That is, UE configured with a UL MTRP-URLLC transmission method may transmit the same data/UCI by using a different space/time/frequency resource. Here, the UE may be indicated by the base station for a Tx beam and Tx power (i.e., UL TCI state) to be used in space/time/frequency resources for transmitting the same data/UCI. For example, when the same data/UCI is transmitted in resource 1 and resource 2, the UE may be indicated by the base station to indicate the UL TCI state used in resource 1 and the UL TCI state used in resource 2 from the base station. This UL M-TRP URLLC may be applied to PUSCH/PUCCH.

In addition, in describing the present disclosure, when receiving/transmitting data/DCI/UCI through a specific space/time/frequency resource, using (or mapping) a specific TCI state(or TCI) may mean that, for DL, estimating a channel from the DMRS using the QCL type and QCL RS indicated by a specific TCI state in a specific space/time/frequency resource, and receiving/demodulating data/DCI/UCI with the estimated channel.

In addition, when receiving/transmitting data/DCI/UCI through a specific space/time/frequency resource, using (or mapping) a specific TCI state (or, TCI) may mean that, for UL, DMRS and data/UCI are transmitted/modulated using a Tx beam and/or Tx power indicated by a specific TCI state in a specific space/time/frequency resource.

And, the UL TCI state may include Tx beam or Tx power information of the UE. In addition, the base station may configure spatial relation information or the like for the UE through other parameters instead of the TCI state.

For example, the UL TCI state may be directly indicated to the UE through a UL grant DCI. Alternatively, the UL TCI state may mean spatial relationship information of an SRS resource indicated through an SRS resource indicator (SRI) field of a UL grant DCI. Alternatively, the UL TCI state may mean an open loop (OP) Tx power control parameter connected to a value indicated through the SRI field of the UL grant DCI.

Here, the OL Tx power control parameter may include, for example, j (index and alpha for OP parameter(s) Po (maximum 32 parameter values set per cell), $q\_d$ (index of DL RS resources for PL (path loss) measurement (up to 4 measurements per cell), or/and I(closed loop power control process index (up to 2 processes per cell)).

As another embodiment of the present disclosure, the M-TRP eMBB transmission method refers to a method in which M-TRP transmits different data/DCI using different space/time/frequency resources. If the M-TRP eMBB transmission method is configured, it may be assumed that the UE receives a plurality of TCI states from the base station through DCI, and that data received using QCL RSs indicated by each of the plurality of TCI states are different from each other.

In addition, since the RNTI for M-TRP URLLC and the M-TRP eMBB RNTI are separately used, the UE may determine whether a specific transmission/reception is M-TRP URLLC transmission/reception or M-TRP eMBB transmission/reception. For example, when RNTI for URLLC is used and CRC masking is performed for DCI, the UE may determine the corresponding transmission as URLLC transmission. In addition, when the RNTI for eMBB is used and CRC masking is performed for DCI, the UE may determine the corresponding transmission as eMBB transmission. As another example, the base station may configure the M-TRP URLLC transmission/reception method or the M-TRP eMBB transmission/reception method to the UE through new signaling.

For convenience of description of the present disclosure, it has been assumed that 2 TRPs cooperate with each other to perform a transmission/reception operation, but the present disclosure is not limited thereto. That is, the present disclosure may be extended and applied even in a multi-TRP environment of 3 or more, and may be extended and applied even in an environment in which transmission/reception is performed in different panels or beams in the same TRP. The UE may recognize different TRPs as different TCI states. That the UE transmits/receives data/DCI/UCI using TCI state 1 means that it transmits/receives data/DCI/UCI/ from TRP 1 (or to TRP 1).

The present disclosure may be utilized in a situation in which the M-TRP cooperatively transmits the PDCCH (repetitively transmits or divides the same PDCCH). In addition, the present disclosure may be utilized in a situation in which M-TRP cooperatively transmits PDSCH or cooperatively receives PUSCH/PUCCH.

In addition, in describing the present disclosure, repeatedly transmitting the same PDCCH by a plurality of base stations (M-TRP) may mean transmitting the same DCI through a plurality of PDCCH candidates and has the same meaning that multiple base stations repeatedly transmit the same DCI. Here, two DCIs having the same DCI format/size/payload may be viewed as the same DCI.

Alternatively, if the scheduling results are the same even if the payloads of the two DCIs are different, the two DCIs may be regarded as the same DCI. For example, the time domain resource allocation (TDRA) field of DCI may relatively determine the slot/symbol position of data and the slot/symbol position of A(ACK)/N(NACK) based on the reception time of the DCI.

In this case, when the DCI received at time n and the DCI received at time n+1 indicate the same scheduling result to the UE, the TDRA fields of the two DCIs are different, and as a result, the DCI payload is different from each other. Accordingly, even if the payloads of the two DCIs are different, if the scheduling results are the same, the two DCIs may be regarded as the same DCI. Here, the number of repetitions R may be directly indicated by the base station to the UE or mutually promised.

Alternatively, even if the payloads of the two DCIs are different and the scheduling results are not the same, when the scheduling result of one DCI is a subset of the scheduling result of the other DCI, the two DCIs may be regarded as the same DCI.

For example, if the same data is TDM and repeatedly transmitted N times, DCI 1 received before the first data indicates (or schedules) repetition of data N times, and DCI 2 received before the second data indicates repetition (scheduling) of data N-1. In this case, the scheduling result (or data) of DCI 2 becomes a subset of the scheduling result (or data) of DCI 1, and both DCIs have scheduling results for the same data. Accordingly, even in this case, the two DCIs may be regarded as the same DCI.

And, in describing the present disclosure, dividing and transmitting the same PDCCH by a plurality of base stations may mean that one DCI is transmitted through one PDCCH candidate, but TRP 1 transmits some resources defined for the corresponding PDCCH candidate and TRP 2 transmits the remaining resources.

For example, when TRP 1 and TRP 2 divide and transmit PDCCH candidates corresponding to aggregation level m1 + m2, a PDCCH candidate may be divided into PDCCH candidate 1 corresponding to aggregation level m1 and PDCCH candidate 2 corresponding to aggregation level m2, TRP 1 may transmit PDCCH candidate 1, and TPR 2 may transmit PDCCH candidate 2. In this case, TRP 1 and TRP 2 may transmit PDCCH candidate 1 and PDCCH candidate 2 using different time/frequency resources. After receiving the PDCCH candidate 1 and the PDCCH candidate 2, the UE may generate a PDCCH candidate corresponding to the aggregation level m1+m2 and attempt DCI decoding.

In this case, the method in which the same DCI is divided and transmitted to several PDCCH candidates may be implemented in the following two methods.

The first method is a method in which DCI payload (e.g., control information + CRC) is encoded through one channel encoder (e.g., polar encoder) and divided into two TRPs and transmitted. That is, the first method means a method of dividing and transmitting the coded bits obtained according to the encoding result in two TRPs. Here, the entire DCI payload may be encoded in the coded bit transmitted by each TRP, but is not limited thereto, and only some DCI payloads may be encoded.

The second method divides the DCI payload (e.g., control information + CRC) into two DCIs (DCI 1 and DCI 2) and encodes each of them through a channel encoder (e.g., a polar encoder). Thereafter, each of the two TRPs may transmit a coded bit corresponding to DCI 1 and a coded bit corresponding to DCI 2 to the terminal.

That is, dividing/repeating the same PDCCH by a plurality of base stations (M-TRP) and transmitting over a plurality of monitoring occasions (MOs) may mean that 1) the coded bit encoding the entire DCI content of the corresponding PDCCH is repeatedly transmitted through each MO for each base station (S-TRP), 2) the coded bit encoding the entire DCI content of the corresponding PDCCH is divided into a plurality of parts, and each base station (S-TRP) transmits different parts through each MO, or 3) the DCI content of the corresponding PDCCH is divided into a plurality of parts, and different parts are encoded for each base station (S-TRP) (that is, separately encoded) and transmitted through each MO.

Repeatedly/split transmission of the PDCCH may be understood as transmitting the PDCCH multiple times over several transmission occasions (TO).

Here, TO may mean a specific time and/or frequency resource unit in which the PDCCH is transmitted. For example, when the PDCCH is transmitted multiple times (to a specific RB) over slots 1, 2, 3, and 4, TO may mean each slot. As another example, if the PDCCH is transmitted multiple times (in a specific slot) over RB sets 1, 2, 3, and 4, TO may mean each RB set. As another example, if the PDCCH is transmitted multiple times over different times and frequencies, TO may mean each time/frequency resource. In addition, the TCI state used for DMRS channel estimation may be set differently for each TO, and it may be assumed that the TOs in which the TCI state is set differently are transmitted by different TRPs/panels.

Repeatedly transmitting or dividing the PDCCH by a plurality of base stations may mean that the PDCCH is transmitted over multiple TOs, and the union of the TCI states configured in the corresponding TOs consists of two or more TCI states. For example, PDCCH transmitting over TO 1,2,3,4 may mean that TCI states 1,2,3,4 are configured in each of TO 1,2,3,4 and TRP i cooperatively transmits the PDCCH in TO i.

In describing the present disclosure, repeatedly transmitting the same PUSCH to a plurality of base stations (i.e., M-TRP) by the UE may mean that the UE transmits the same data through a plurality of PUSCHs, and each PUSCH may be transmitted by being optimized for UL channels of different TRPs.

For example, the UE may repeatedly transmit the same data through PUSCH 1 and PUSCH 2. In this case, PUSCH 1 may be transmitted using UL TCI state 1 for TRP 1, and link adaptation such as precoder/MCS may also be scheduled to receive a value optimized for the channel of TRP 1 to transmit the PUSCH. PUSCH 2 is transmitted using UL TCI state 2 for TRP 2, and link adaptation such as a precoder/MCS may also be scheduled for a value optimized for the channel of TRP 2 to transmit the PUSCH. In this case, the repeatedly transmitted PUSCH 1 and PUSCH 2 may be transmitted at different times to be TDM, FDM, or SDM.

In addition, in describing the present disclosure, transmitting, by UE to a plurality of base stations (i.e., M-TRP), the same PUSCH by dividing it may mean that one data is transmitted through one PUSCH, but the resources allocated to the PUSCH are divided and optimized for UL channels of different TRPs for transmission.

For example, the UE may transmit the same data through a 10-symbol PUSCH. At this time, the first 5 symbols among 10 symbols may be transmitted using UL TCI state 1 for TRP 1, and the UE may transmit a 5-symbol PUSCH (to TRP 1) by receiving a link adaptation such as precoder/MCS and scheduling a value optimized for a channel of TRP 1. The remaining 5 symbols may be transmitted using UL TCI state 2 for TRP 2, and the UE may transmit the remaining 5-symbol PUSCH (with TRP 2) by receiving a link adaptation such as precoder/MCS and scheduling a value optimized for the channel of TRP 2.

In the above example, a method of dividing one PUSCH into time resources and performing TDM transmission for TRP 1 and TRP 2 has been described. However, the present disclosure is not limited thereto, and the UE may divide and transmit the same PUSCH to a plurality of base stations by using the FDM/SDM method.

The UE may repeatedly transmit the PUCCH to a plurality of base stations (similar to PUSCH transmission) or divide and transmit the same PUCCH.

And, when a plurality of TOs are indicated for the terminal in order to repeatedly transmit PDCCH/PDSCH/PUSCH/PUCCH or divide and transmit PDCCH/PDSCH/PUSCH/PUCCH, for each TO, UL may be transmitted toward a specific TRP, or DL may be received from a specific TRP. At this time, the UL TO (or the TO of TRP 1) transmitted toward TRP 1 may mean a TO using a first value of two spatial relations, two UL TCIs, two UL power control parameters or two pathloss (PL)-RS indicated to the terminal. And, UL TO (or TO of TRP 2) transmitted toward TRP 2 may mean a TO using a second value of two spatial relations, two UL TCIs, two UL power control parameters, or two PL-RSs indicated to the UE.

Similarly, in the case of DL transmission, the DL TO transmitted by TRP 1 (or TO of TRP 1) may mean a TO using a first value of two DL TCI states indicated to the terminal (e.g., when two TCI states are set in CORESET), and the DL TO transmitted by TRP 2 (or TO of TRP 2) may mean a TO using a second value of two DL TCI states indicated to the terminal (e.g., two TCI states are set in CORESET).

The present disclosure may be extended and applied to various channels such as PUSCH/-PUCCH/PDSCH/PDCCH. In addition, the present disclosure may be extended and applied to both the case of repeatedly transmitting the channel and the case of dividing and transmitting the channel in different space/time/frequency resources.

In addition, in terms of the DCI transmission, the M-TRP transmission scheme may be devided into i) a multiple DCI (M-DCI)-based M-TRP transmission scheme in which each TRP transmits a different DCI, and ii) a single DCI (S-DCI)-based M-TRP transmission scheme in which one TRP transmits a DCI. For example, in the case of S-DCI, since all scheduling information for data transmitted by the M-TRP need to be transferred through one DCI, it may be used in an ideal BackHaul (ideal BH) environment where dynamic cooperation between two TRPs is possible.

Related to enhanced M-TRP transmission and reception

With respect to M-TRP transmission/reception in Rel-16 NR standardization, PDSCH transmission/reception according to the S-DCI based M-TRP transmission scheme and the M-DCI based M-TRP transmission scheme is supported.

First, an S-DCI based M-TRP PDSCH transmission scheme will be described.

One of SDM/FDM/TDM schemes may be used for S-DCI based M-TRP PDSCH transmission. In the case of SDM, the base station transmits one TB using a multi-layer, but transmits layers belonging to different DMRS CDM groups with different Tx beams (i.e., QCL RS or TCI state). Through this, the transmission capacity may be improved by increasing the number of layers compared to the existing S-TRP transmission scheme. In addition, when one TB is transmitted using multiple layers, some layers are transmitted to TRP 1 and the other layers are transmitted to TRP 2, whereby channel reliability due to diversity gain may be improved.

In the case of FDM, scheme 2a and 2b are supported. Here, scheme 2a is a scheme in which one TB is transmitted using a multi-RB, but RBs belonging to different RB groups are transmitted using different Tx beams (i.e., QCL RS or TCI state). Scheme 2b is a scheme for transmitting the same TB using different RB groups, but transmitting RBs belonging to different RB groups using different Tx beams (i.e., QCL RS or TCI state). In the case of TDM, schemes 3 and 4, are supported. Here, scheme 4 (i.e., inter-slot TDM) is a scheme for repeatedly transmitting the same TB in several slots, but transmitting slots belonging to different slot groups using different Tx beams (i.e., QCL RS or TCI state). On the other hand, Scheme 3 (i.e., intra-slot TDM) is a scheme for repeatedly transmitting the same TB in several OFDM symbol groups, but transmitting some OFDM symbol groups and the remaining OFDM symbol groups using different Tx beams (i.e., QCL RS or TCI state).

Next, an M-DCI based M-TRP PDSCH transmission scheme will be described.

M-DCI based MTRP PDSCH transmission is a scheme in which each TRP schedules and transmits a PDSCH through DCI. That is, TRP 1 transmits PDSCH 1 through DCI 1, and TRP 2 transmits PDSCH 2 through DCI 2. When PDSCH 1 and PDSCH 2 overlap on the same frequency and time resource, since two PDSCHs are received for the same RE, resource efficiency is increased and transmission capacity is increased. For this, the concept of a CORESET pool, which means a group of several CORESETs, has been introduced. For example, TRP 1 transmits a PDCCH through CORESET belonging to CORESET pool 0, and also transmits a PDSCH scheduled by the corresponding PDCCH. TRP 2 transmits a PDCCH through CORESET belonging to CORESET pool 1, and also transmits a PDSCH scheduled by the corresponding PDCCH.

Even in the case of PUSCH, a specific TRP may schedule PUSCH transmission to the UE through CORESET belonging to each COERSET pool. For example, some PUCCH resources may be scheduled by TRP 1, and the remaining PUCCH resources may be scheduled by TRP 2. The UE may transmit an independent PUSCH/PUCCH for each of TRPs 1 and 2.

In addition, the UE may recognize a PUSCH (or PUCCH) scheduled by DCI received based on different CORESETs (or CORESETs belonging to different CORESET groups) as a PUSCH (or PUCCH) transmitted to different TRPs or as a PUSCH (or PUCCH) of a different TRP. In addition, the scheme for UL transmission (e.g., PUSCH/PUCCH) transmitted to different TRPs may be equally applied to UL transmission transmitted to different panels belonging to the same TRP.

In addition, the CORESET group ID (or COERSET pool index with the same meaning) described/mentioned in the present disclosure may mean index/identification information (e.g., ID) for distinguishing CORESET for each TRP/panel. In addition, the CORESET group may mean a group/union of CORESETs distinguished by index/identification information (e.g., ID)/CORESET group ID for distinguishing CORESETs for each TRP/panel. As an example, the CORESET group ID may be specific index information defined in CORESET configuration. That is, the CORESET group may be configured/indicated/defined by the index defined in the CORESET configuring for each CORESET. And/or, the CORESET group ID may mean an index/identification information/indicator for classification/identification between CORESETs configured/related to each TRP/panel.

CORESET group ID described/mentioned in this disclosure may be expressed by being replaced with a specific index/specific identification information/specific indicator for classification/identification between CORESETs set/associated with each TRP/panel. Corresponding information may be configured/indicated through higher layer signaling (e.g., RRC signaling, MAC-CE, etc.) and/or physical layer signaling (e.g., DCI). As an example, it may be configured/indicated to perform PDCCH detection for each TRP/panel in a corresponding CORESET group unit, and UCI (e.g., CSI, HARQ-ACK/NACK, SR, etc.) for each TRP/panel in a corresponding CORESET group unit. And/or uplink physical channel resources (e.g., PUCCH/PRACH/SRS resources) may be configured/indicated to be managed/controlled separately. And/or, HARQ ACK/NACK (process/retransmission) for PDSCH/PUSCH, etc. scheduled for each TRP/panel in units of the corresponding CORESET group may be managed.

For example, the higher layer parameter ControlResourceSet IE (information element) is used to configured a time/frequency control resource set (control resource set, CORESET). The corresponding CORESET may be related to detection/reception of downlink control information. The ControlResourceSet IE may include a CORESET-related ID (e.g., controlResourceSetID)/CORESET pool index for CORESET (e.g., CORESETPoolIndex)/time/frequency resource setting of CORESET/TCI information related to CORESET. As an example, the index of the CORESET pool (e.g., CORESETPoolIndex) may be configured to 0 or 1. In the above description in the present disclosure, a CORESET group may correspond to a CORESET pool, and a CORESET group ID may correspond to a CORESET pool index (e.g., CORESETPoolIndex). The aforementioned ControlResourceSet (ie, CORESET) may be configured through higher layer signaling (e.g., RRC signaling).

Additionally, in relation to M-TRP transmission and reception in Rel-17 NR standardization, M-TRP PDCCH/PDSCH SFN transmission, S-DCI based M-TRP PUSCH repetition transmission, and single PUCCH resource based M-TRP PUCCH repetition transmission are supported. In the transmission schemes, the same contents (i.e., DCI/UL TB/UCI, etc.) are repeatedly transmitted by improving the URLLC target for increasing reliability. Here, M-TRP PDCCH repetition transmission is performed based on TDM or FDM, M-TRP PDCCH/PDSCH SFN transmission is performed in the same time/frequency/layer, and S-DCI based M-TRP PUSCH repetition transmission is performed based on TDM, and a single PUCCH resource based M-TRP PUCCH repetition transmission is performed based on TDM.

First, the S-DCI based M-TRP PDCCH repetition transmission scheme will be described.

In NR Rel-17 standardization, a plurality of CORESETs in which different TCI states (i.e., different QCL RSs) are configured for M-TRP PDCCH repetition transmission are configured to the terminal, and a plurality of SS sets respectively connected to the corresponding CORESETs are configured. The base station may indicate/configured that the SS set connected to one CORESET and the SS set connected to another CORESET are linked for repetition transmission to the terminal. Through this, the terminal may recognize that PDCCH candidates of the corresponding SS set are repeatedly transmitted.

For example, two CORESETs, CORESET 0 and CORESET 1, may be configured to the terminal, CORESET 0 and CORESET 1 may be connected to SS set 0 and SS set 1, respectively, and SS set 0 and SS set 1 may be linked. The terminal may recognize that the same DCI is repeatedly transmitted in the PDCCH candidate of SS set 0 and the PDCCH candidate of SS set 1, and based on a specific rule, the terminal may recognize that the specific PDCCH candidate of SS set 0 and the specific PDCCH candidate of SS set 1 correspond to a pair configured for repeatedly transmitting the same DCI. The two PDCCH candidates may be referred to as linked PDCCH candidates, and when the terminal properly receives any one of the two PDCCH candidates, the corresponding DCI may be successfully decoded. However, when receiving the PDCCH candidate of SS set 0, the terminal may use the QCL RS (i.e., DL beam) of the TCI state of COERSET 0 connected to SS set 0, and when receiving the PDCCH candidate of SS set 1, the terminal may use the QCL RS (ie, DL beam) of the TCI state of COERSET 1 connected to SS set 1. Accordingly, the terminal receives the associated PDCCH candidates using different beams.

Next, the M-DCI based M-TRP PDCCH repetition transmission scheme will be described.

As one of the M-TRP PDCCH repetition transmission types, a plurality of TRPs may repeatedly transmit the same DCI through the same time/frequency/DMRS port, and such a transmission method may be referred to as SFN PDCCH transmission. However, for SFN PDCCH transmission, the base station configures a plurality of TCI states in one CORESET instead of configuring a plurality of CORESETs in which different TCI states are configured. When the terminal receives the PDCCH candidate through the SS set connected to the one CORESET, the terminal may perform channel estimation of the PDCCH DMRS and attempt decoding by using all of the plurality of TCI states.

In addition, during the above-described M-TRP PDSCH repetition transmission, the two TRPs repeatedly transmit the corresponding channel to different resources. However, when the resources used by the two TRPs are the same, that is, when the same channel is repeatedly transmitted through the same frequency/time/layer (i.e., DMRS port), the reliability of the corresponding channel may be improved. In this case, since the same channel repeatedly transmitted is received while being transmitted (i.e., air) because the resources are not distinguished, it may be recognized as one channel (e.g., a composite channel) from a reception side (e.g., terminal). For SFN PDSCH transmission, two DL TCI states for PDSCH DMRS reception may be configured in the terminal.

Next, the S-DCI based M-TRP PUSCH repetition transmission scheme will be described.

In NR Rel-17 standardization, the base station configured two SRS sets to the terminal for S-DCI based M-TRP PUSCH transmission, and each set is used for indicating UL beam/QCL information for a UL Tx port for TRP 1 and TRP 2. In addition, the base station may indicate the SRS resource for each SRS resource set through two SRI fields included in one DCI, and may indicate up to two PC parameter sets. For example, the first SRI field may indicate the SRS resource and PC parameter set defined in SRS resource set 0, and the second SRI field may indicate the SRS resource and PC parameter set defined in SRS resource set 1. The terminal may be indicated with UL Tx port, PC parameter set, and UL beam/QCL information for TRP 1 through the first SRI field, and through this, the terminal performs PUSCH transmission in the TO corresponding to SRS resource set 0. Similarly, the terminal may be indicated with UL Tx port, PC parameter set, and UL beam/QCL information for TRP 2 through the second SRI field, and through this, the terminal performs PUSCH transmission in the TO corresponding to SRS resource set 1.

Next, the Single PUCCH resource based M-TRP PUCCH repetition transmission scheme will be described.

In NR Rel-17 standardization, the base station may activate/configure two spatial relation info on a single PUCCH resource to the terminal for the Single PUCCH resource based M-TRP PUCCH transmission (if FR1, enable/configure two PC parameter sets). When UL UCI is transmitted through the corresponding PUCCH resource, each spatial relation info is used to indicate to the terminal the spatial relation info for TRP 1 and TRP 2, respectively. For example, through the value indicated in the first spatial relation info, the terminal is indicated with Tx beam/PC parameter(s) toward TRP 1, and the terminal perform PUCCH transmission in TO corresponding to TRP 1 using corresponding information. Similarly, through the value indicated in the second spatial relation info, the terminal is indicated with Tx beam/PC parameter(s) toward TRP 2, and the terminal performs PUCCH transmission in the TO corresponding to TRP 2 using the corresponding information.

In addition, for M-TRP PUCCH repetition transmission, the configuring scheme is improved so that two spatial relation info may be configured in the PUCCH resource. That is, when power control (PC) parameters such as PLRS, Alpha, P0, and Closed loop index are set in each spatial relation info, spatial relation RS may be configured. As a result, PC information and spatial relation RS information corresponding to two TRPs may be configured through two spatial relation info. Through this, the terminal transmits UCI (i.e., CSI, ACK/NACK, SR, etc.) PUCCH in the first TO using the first spatial relation info, and transmits the same UCI PUCCH in the second TO using the second spatial relation info. In the present disclosure, a PUCCH resource in which two spatial relation info is configured is referred to as an M-TRP PUCCH resource, and a PUCCH resource in which one spatial relation info is configured is referred to as an S-TRP PUCCH resource.

Also, in the NR wireless communication system, S-DCI based multi-TB PUSCH/PDSCH scheduling may be considered. For example, in an ultra-high frequency band (e.g., beyond 5.26GHz, FR2 band) of an NR wireless communication system (e.g., a Rel-17 based NR system), a scheme in which one DCI simultaneously schedules multiple PUSCHs/PDSCHs may be supported.

As a specific example, a plurality of time resources (e.g., TDRA, Transmission Occasion (TO)) may be indicated at once through a time resource allocation field (e.g., TDRA field) of a DCI scheduling a PUSCH. In this case, different TBs for each TO may be transmitted through the PUSCH. The value of the frequency resource allocation field (e.g., FDRA field), the Modulation and Coding Scheme (MCS) field, the transmitted precoding matrix indicator (TPMI) field, and/or the SRS resource indicator (SRI) field of the DCI may be commonly applied to a plurality of scheduled TBs. In addition, new data indicator (NDI) and redundancy version (RV) for each TB may be individually indicated through the corresponding DCI, and one value for HARQ number may be indicated, but may sequentially increase in TO order based on an initial TO.

In addition, in relation to the NR wireless communication system, a method in which a terminal simultaneously transmits several channels/RSs of the same type or a method of simultaneously transmitting several channels/RSs of different types may be considered.

In the case of an existing terminal, an operation of transmitting multiple channels/RSs at one time is restricted. For example, the terminal may simultaneously transmit a plurality of SRS resources of different SRS resource sets for UL beam management, but may not simultaneously transmit a plurality of PUSCHs. Unlike this, in the future, an enhanced terminal may be considered to relax the above restrictions and simultaneously transmit a plurality of channels/RSs using a plurality of transmission panels. Such a terminal may be referred to as a simultaneous transmission across multi-panel (STxMP) terminal.

For example, a method for scheduling two PUSCHs (i.e., a first PUSCH and a second PUSCH) corresponding to two UL TBs to the same resource element (RE), and configuring a first spatial info RS and a first power control (PC) parameter set for the first PUSCH, and configuring a second spatial info RS and a second PC parameter set for the second PUSCH may be applied. That is, a first UL TCI state may be configured for the first PUSCH, and a second UL TCI state may be configured for the second PUSCH. In this case, the treminal may transmit the first PUSCH using the first Tx spatial filter (e.g. a first panel) corresponding to the first UL TCI state, and may transmit the second PUSCH using the second Tx spatial filter (e.g. a second panel) corresponding to the second UL TCI state.

In this regard, when the base station schedules the PUSCH through DCI, the base station may indicate the terminal with information on which one of the STxMP scheme, the single panel-based scheme, or the M-TRP-based PUSCH repetition transmission scheme is applied as the corresponding PUSCH transmission scheme. Here, the STxMP scheme is available when the terminal supports the STxMP capability, and the STxMP mode needs to be enabled in advance through RRC signaling or the like for the terminal. For this, the existing SRS resource set indication field may be redefined or a new DCI field may be introduced.

Additionally, with respect to the aforementioned STxMP transmission method, two methods may be considered: the single frequency network (SFN) method and the spatial division multiplexing (SDM) method.

Specifically, the SFN method is a method of transmitting the same channel as that transmitted by one panel to other panels. At this time, since the UL channels of each panel may be different, UL transmission may be performed using different precoders, different transmission powers, and different transmission beams (e.g., spatial relation RSs indicated by the UL TCI state) for each panel.

The SDM method is a method that may be applied to transmission based on a rank greater than or equal to 2, and is a method of transmitting some layers among multi-layers on one panel and transmitting the remaining layers on another panel. For example, in the case of the SDM method for 2-layer transmission, the first layer may be transmitted on the first panel, and the second layer may be transmitted on the second panel. At this time, since the UL channels of each panel may be different, UL transmission may be performed using different precoders, different transmission powers, and different transmission beams (e.g., spatial relation RSs indicated by UL TCI state) for each panel in consideration of this.

The panels described in the present disclosure may be applied by replacing them with other resources/terms corresponding to the panels.

For example, different panels may be mapped to and used with different SRS resource sets or SRS resources. As a specific example, a first panel may be mapped to SRS resource set 0, and a second panel may be mapped to SRS resource set 1. In this case, the SRS resource(s) belonging to SRS resource set 0 may be associated with the (Tx) antenna port of the first panel, and the SRS resource(s) belonging to SRS resource set 1 may be associated with the (Tx) antenna port of the second panel.

In addition, in the NR wireless communication system, the UL TCI state as well as the DL TCI state may be indicated through DL DCI (e.g., DCI format 1_1/1_2, etc.), and the UL TCI state may only be indicated without an indication of the DL TCI state. Through this, the scheme(s) used for configuring UL spatial information (e.g., UL beam) and power control (PC) in an existing NR wireless communication system (e.g., NR system in Rel-15/16) may be applied replacing/extending as a method for indicating the UL TCI state.

As a specific example, one UL TCI state may be indicated through the TCI field of DL DCI, and the corresponding UL TCI state may be applied to all PUSCHs/PUCCHs after a certain time (e.g., beam application time). In addition, the corresponding UL TCI state may be applied to some or all of the SRS resource sets.

In this regard, a method of indicating a plurality of UL TCI states (and/or D1 TCI states) through a TCI field of DL DCI may also be considered.

Method for configuring/indicating uplink transmission for a user equipment that supports sharing M ports among N panels

With respect to PUSCH transmission, the UE may apply a single TRP (STRP) transmission method or a STxMP-based SDM transmission method. Here, the STRP transmission method may mean a single panel-based transmission method, i.e., non-STxMP transmission. In this regard, the UE may be configured/receive indication from the base station to use the STRP transmission method or the STxMP-based SDM transmission method for PUSCH transmission.

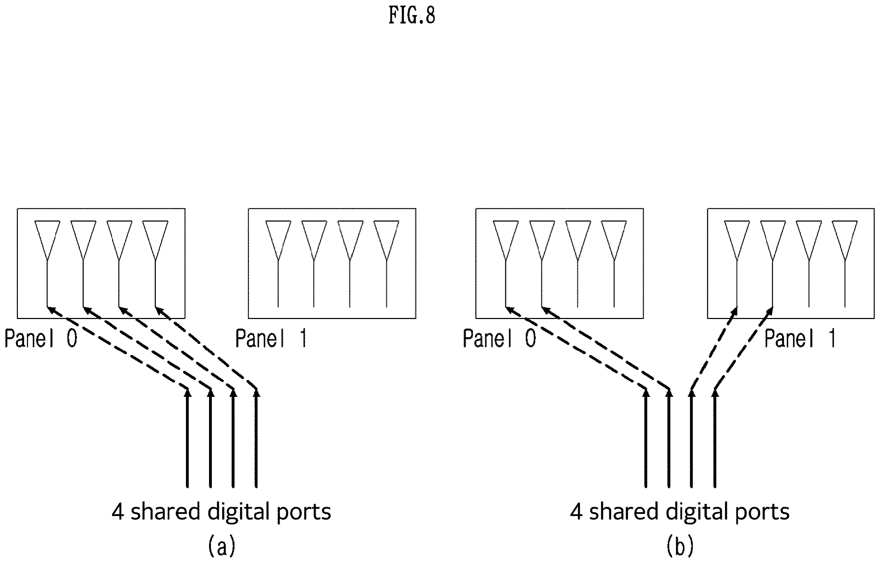

FIG. 8 illustrates a structure for sharing ports between panels to which the present disclosure may be applied.

Referring to FIG. 8, with respect to the implementation method of the UE, a structure in which N digital ports may be shared for multiple panels (e.g., Panel 0, Panel 1, etc.) may be considered.

The digital port described in the present disclosure may mean a port having an independent TxRU for each digital port, an independent power amplifier (PA), or a port in which a baseband signal is processed.

For example, in the case of a 4-port STRP transmission as in FIG. 8(a), the UE may use either 4 ports belonging to Panel 0 or 4 ports belonging to Panel 1. In contrast, in the case of a 4-port SDM transmission as in FIG. 8(b), the UE may use 2 ports for each panel. That is, in this case, the UE may use 2 ports belonging to Panel 0 and 2 ports belonging to Panel 1.

In the present disclosure, for a UE that supports a method in which M panels share N ports (e.g., digital ports) (wherein M and N are natural numbers), a method for indicating a precoding matrix indicator (PMI) for uplink transmission and applying a full power transmission mode (full power Tx mode) related thereto is proposed.

For clarity of explanation, it is assumed that the UE mentioned in the following explanation is a UE that supports a method in which M panels share N ports (e.g., digital ports).

In this regard, whether M panels support a method in which N ports are shared may be information reported to a base station as capability information of the UE, or may be pre-defined/implemented information. For example, in relation to reporting capability information of the UE, if the number of non-zero power (NZP) PUSCH antenna ports reported by the UE is smaller than the number of SRS antenna ports (i.e., the number of antenna ports supported by one panel), the UE may be interpreted as supporting a method in which ports are shared between panels.

Embodiment 1

This embodiment relates to a method for indicating and applying PMI in relation to uplink transmission of a UE that supports a method in which M panels share N ports (e.g., digital ports).

When STRP transmission or STxMP transmission is configured, the UE may utilize the digital port as illustrated in FIG. 8(a) or FIG. 8(b), respectively.

For this purpose, two SRS resource sets may be configured for the UE, and a 4-port SRS resource may be configured for an SRS resource set (e.g., SRS resource set 0) corresponding to a first panel (e.g., Panel 0), and a 4-port SRS resource may be configured for an SRS resource set (e.g., SRS resource set 1) corresponding to a second panel (e.g., Panel 1). Through two SRI fields (i.e., a first SRI field, a second SRI field) in UL scheduling DCI (e.g., DCI format 0_0, DCI format 0_1, etc.), the base station may indicate to the UE the SRS resources of SRS resource set 0 and the SRS resources of SRS resource set 1, respectively. Additionally, through two PMI fields (i.e., the first TPMI field and the second TPMI field) within the UL scheduling DCI, the base station may indicate to the UE which PMI to apply to the SRS resources of SRS resource set 0 and which PMI to apply to the SRS resources of SRS resource set 1, respectively.

Additionally, using the SRS resource set selection field within the UL scheduling DCI, the base station may indicate to the UE whether the transmission is a STRP transmission or an STxMP transmission. In this case, in the case of a STRP transmission, the base station may indicate to the UE the SRS resources and TPMI for one panel (i.e., one SRS resource set) using one SRI field and one TPMI field. Conversely, in the case of a STxMP transmission, the base station may indicate to the UE the SRS resources and TPMI for two panels (i.e., two SRS resource sets) using two SRI fields and two TPMI fields.

For clarity of explanation, this embodiment will be described separately for a case where a UE has four (shared) digital ports and a four-port SRS resource is set for each panel (hereinafter, Embodiment 1-1) and a case where a UE has two (shared) digital ports and a two-port SRS resource is set for each panel (hereinafter, Embodiment 1-2). However, this is merely an example, and the proposed method applied to the present disclosure is identical/similar.

Additionally, the method described in the present disclosure may be extended to cases where UEs have different numbers of (shared) digital ports and where SRS resources with different numbers of ports are set for each panel of the UE.

Embodiment 1-1

This embodiment relates to a method for indicating and applying a PMI when a UE has four (shared) digital ports and a 4-port SRS resource is configured for each panel.

In the aforementioned operation, when STxMP transmission is indicated, since each panel may only use two digital ports out of four, the UE shall use only PMIs for which at least two antenna ports have a value of zero among the 4-Tx PMIs (i.e., PMIs for 4-port transmission) for each panel. In other words, only PMI vectors/matrices with at least two rows having a value of zero need to be used.

For example, if the transmission rank of a specific panel is 1, the PMI may be configured/indicated for that panel using a rank 1 codebook.

Table 6 illustrates a 4-Tx codebook for transmission rank 1.

[Table 6]

| TPMI index | W (ordered from left to right in increasing order of TPMI index) | | | | | | | |
|---|---|---|---|---|---|---|---|---|
| 0 - 7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 - 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\1\end{bmatrix}$ | $\frac{1}{2}\begin{bmatrix}1\\1\\j\\j\end{bmatrix}$ | $\frac{1}{2}\begin{bmatrix}1\\1\\-1\\-1\end{bmatrix}$ | $\frac{1}{2}\begin{bmatrix}1\\1\\-j\\-j\end{bmatrix}$ |
| 16 - 23 | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ | $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ |
| 24 - 27 | $\frac{1}{2}\begin{bmatrix}1\\-j\\1\\-j\end{bmatrix}$ | $\frac{1}{2}\begin{bmatrix}1\\-j\\j\\1\end{bmatrix}$ | $\frac{1}{2}\begin{bmatrix}1\\-j\\-1\\j\end{bmatrix}$ | $\frac{1}{2}\begin{bmatrix}1\\-j\\-j\\-1\end{bmatrix}$ | - | - | - | - |

Referring to Table 6, Entries (i.e., TPMI indices) 0 to 3 may be codebooks for non-coherent transmission, Entries 4 to 11 may be codebooks for partial coherent transmission, and Entries 12 to 27 may be codebooks for full coherent transmission.

At this time, considering the aforementioned condition, that is, a PMI vector/matrix with at least two rows having a value of 0, the available TPMI indices may be limited to {0 to 11}. That is, the available PMI set may be all PMIs from TPMI indices 0 to TPMI indices 11, and may be PMIs excluding full coherent PMIs.

Additionally or alternatively, as illustrated in FIG. 8 (particularly, FIG. 8(b)), the available PMI set for each panel may be determined/selected/restricted considering different characteristics of the digital ports used in the two panels. For example, the available PMI set for a first panel (e.g., Panel 0) may be PMIs having 0 values in the 2nd and 4th rows (i.e., TPMI indices = {0, 2, 4, 5, 6, 7}), and the available PMI set for a second panel (e.g., Panel 1) may be PMIs having 0 values in the 1st and 3rd rows (i.e., TPMI indices = {1, 3, 8, 9, 10, 11}).

Additionally or alternatively, since the SRS resources are already separated for the two panels (i.e., the SRS resources are set separately for each set of SRS resources), the available PMI set for both panels may be restricted to TPMI indices = {0, 2, 4, 5, 6, 7}.

If a particular panel has a non-coherent property (i.e., the phases may not be aligned between the ports used by the panel), the available PMI set for the panel may be further restricted to TPMI indices = {0 to 3}. That is, with respect to the aforementioned PMI set determination, only the intersection with TPMI indices = {0 to 3} may be further restricted to be used.

For another example, if the transmission rank of a particular panel is 2, the PMI may be configured/indicated for the panel using a rank 2 codebook.

Table 7 illustrates a 4-Tx codebook for transmission rank 2.

[Table 7]

| TPMI index | W (ordered from left to right in increasing order of TPM index) | | | |
|---|---|---|---|---|
| 0 - 3 | $\frac{1}{2}\begin{bmatrix} 1 & 0 \\ 0 & 1 \\ 0 & 0 \\ 0 & 0 \end{bmatrix}$ | $\frac{1}{2}\begin{bmatrix} 1 & 0 \\ 0 & 0 \\ 0 & 1 \\ 0 & 0 \end{bmatrix}$ | $\frac{1}{2}\begin{bmatrix} 1 & 0 \\ 0 & 0 \\ 0 & 0 \\ 0 & 1 \end{bmatrix}$ | $\frac{1}{2}\begin{bmatrix} 0 & 0 \\ 1 & 0 \\ 0 & 1 \\ 0 & 0 \end{bmatrix}$ |
| 4-7 | $\frac{1}{2}\begin{bmatrix} 0 & 0 \\ 1 & 0 \\ 0 & 0 \\ 0 & 1 \end{bmatrix}$ | $\frac{1}{2}\begin{bmatrix} 0 & 0 \\ 0 & 0 \\ 1 & 0 \\ 0 & 1 \end{bmatrix}$ | $\frac{1}{2}\begin{bmatrix} 1 & 0 \\ 0 & 1 \\ 1 & 0 \\ 0 & -j \end{bmatrix}$ | $\frac{1}{2}\begin{bmatrix} 1 & 0 \\ 0 & 1 \\ 1 & 0 \\ 0 & j \end{bmatrix}$ |
| 8 - 11 | $\frac{1}{2}\begin{bmatrix} 1 & 0 \\ 0 & 1 \\ -j & 0 \\ 0 & 1 \end{bmatrix}$ | $\frac{1}{2}\begin{bmatrix} 1 & 0 \\ 0 & 1 \\ -j & 0 \\ 0 & -1 \end{bmatrix}$ | $\frac{1}{2}\begin{bmatrix} 1 & 0 \\ 0 & 1 \\ -1 & 0 \\ 0 & -j \end{bmatrix}$ | $\frac{1}{2}\begin{bmatrix} 1 & 0 \\ 0 & 1 \\ -1 & 0 \\ 0 & j \end{bmatrix}$ |
| 12 - 15 | $\frac{1}{2}\begin{bmatrix} 1 & 0 \\ 0 & 1 \\ j & 0 \\ 0 & 1 \end{bmatrix}$ | $\frac{1}{2}\begin{bmatrix} 1 & 0 \\ 0 & 1 \\ j & 0 \\ 0 & -1 \end{bmatrix}$ | $\frac{1}{2\sqrt{2}}\begin{bmatrix} 1 & 1 \\ 1 & 1 \\ 1 & -1 \\ 1 & -1 \end{bmatrix}$ | $\frac{1}{2\sqrt{2}}\begin{bmatrix} 1 & 1 \\ 1 & 1 \\ j & -j \\ j & -j \end{bmatrix}$ |
| 16 - 19 | $\frac{1}{2\sqrt{2}}\begin{bmatrix} 1 & 1 \\ j & j \\ 1 & -1 \\ j & -j \end{bmatrix}$ | $\frac{1}{2\sqrt{2}}\begin{bmatrix} 1 & 1 \\ j & j \\ j & -j \\ -1 & 1 \end{bmatrix}$ | $\frac{1}{2\sqrt{2}}\begin{bmatrix} 1 & 1 \\ -1 & -1 \\ 1 & -1 \\ -1 & 1 \end{bmatrix}$ | $\frac{1}{2\sqrt{2}}\begin{bmatrix} 1 & 1 \\ -1 & -1 \\ j & -j \\ -j & j \end{bmatrix}$ |
| 20 - 21 | $\frac{1}{2\sqrt{2}}\begin{bmatrix} 1 & 1 \\ -j & -j \\ 1 & -1 \\ -j & j \end{bmatrix}$ | $\frac{1}{2\sqrt{2}}\begin{bmatrix} 1 & 1 \\ -j & -j \\ j & -j \\ 1 & -1 \end{bmatrix}$ | - | - |

Referring to Table 7, Entries (i.e., TPMI indices) 0 to 5 may be codebooks for non-coherent transmission, Entries 8 to 13 may be codebooks for partial coherent transmission, and Entries 14 to 21 may be codebooks for full coherent transmission.

Considering the aforementioned condition, that is, a PMI vector/matrix with at least two rows equal to 0, the available TPMI indices may be restricted to {0 to 5}. That is, the available PMI set may be non-coherent PMIs from TPMI indices 0 to TPMI indices 5.

Additionally or alternatively, as illustrated in FIG. 8 (particularly FIG. 8(b)), the available PMI set for each panel may be determined/selected/restricted, taking into account the different characteristics of the digital ports used in the two panels.

For example, the available PMI set for a first panel (e.g., Panel 0) may be PMIs having 0 values in the 2nd and 4th rows (i.e., TPMI index = {1}), and the available PMI set for a second panel (e.g., Panel 1) may be PMIs having 0 values in the 1st and 3rd rows (i.e., TPMI index = {4}). Conversely, the available PMI set for a first panel (e.g., Panel 0) may be PMIs having 0 values in the 1st and 3rd rows (i.e., TPMI index = {4}), and the available PMI set for a second panel (e.g., Panel 1) may be PMIs having 0 values in the 2nd and 4th rows (i.e., TPMI index = {1}).

For another example, the available PMI set for a first panel (e.g., Panel 0) may be PMIs having 0 values in the 1st and 4th rows (i.e., TPMI index = {3}), and the available PMI set for a second panel (e.g., Panel 1) may be PMIs having 0 values in the 2nd and 3rd rows (i.e., TPMI index = {2}). Conversely, the available PMI set for a first panel (e.g., Panel 0) may be PMIs having 0 values in the 2nd and 3rd rows (i.e., TPMI index = {2}), and the available PMI set for a second panel (e.g., Panel 1) may be PMIs having 0 values in the 1st and 4th rows (i.e., TPMI index = {3}).

As another example, the available PMI set for a first panel (e.g., Panel 0) may be PMIs having 0 values in the 1st and 2nd rows (i.e., TPMI index = {5}), and the available PMI set for a second panel (e.g., Panel 1) may be PMIs having 0 values in the 3rd and 4th rows (i.e., TPMI index = {0}). Conversely, the available PMI set for a first panel (e.g., Panel 0) may be PMIs having 0 values in the 3rd and 4th rows (i.e., TPMI index = {0}), and the available PMI set for a second panel (e.g., Panel 1) may be PMIs having 0 values in the 1st and 2nd rows (i.e., TPMI index = {5}).

In this regard, the aforementioned PMI set, i.e., the PMIs corresponding to TPMI indices = {0 to 5}, may be limited in terms of beamforming gain because they form a beam using only one port per layer.

Considering this, the following PMIs may be additionally defined based on the PMIs exemplified in Table 7, and the additionally defined PMIs may be included in the available PMI set.

For example, an additional PMI may be defined by replacing the values of the second and fourth rows with 0 in the PMI corresponding to TPMI indices {14, 15}. The PMI defined by this method forms a different beam from the PMIs corresponding to TPMI indices = {0 to 5}, and also satisfies the condition that two rows have 0 values, so it may be applied to STxMP transmission. Similarly, an additional PMI may be defined by applying this method to other PMIs. For example, the same result may be obtained by applying this method to TPMI indices {16, 17}, TPMI indices {18, 19}, or TPMI indices {20, 21}.

For another example, an additional PMI may be defined by replacing the values of the 1st and 3rd rows in the PMI corresponding to TPMI indices {14, 15} with 0 values. The PMI defined by this method forms a different beam from the PMIs corresponding to TPMI indices = {0 to 5}, and also satisfies the condition that two rows have 0 values, so it may be applied to STxMP transmission. Similarly, an additional PMI may be defined by applying this method to other PMIs. For example, the same result may be obtained by applying this method to TPMI indices {16, 17}, TPMI indices {18, 19}, or TPMI indices {20, 21}.

As another example, an additional PMI may be defined by replacing the values of the 1st and 4th rows in the PMI corresponding to TPMI indices {14, 15} with 0 values. The PMI defined by this method forms a different beam from the PMIs corresponding to TPMI indices = {0 to 5 }, and also satisfies the condition that two rows have 0 values, so it may be applied to STxMP transmission. Similarly, an additional PMI may be defined by applying this method to other PMIs. For example, the same result may be obtained by applying this method to TPMI indices {16, 17}, TPMI indices {18, 19}, or TPMI indices {20, 21}.

As another example, an additional PMI may be defined by replacing the values of the 2nd and 3rd rows in the PMI corresponding to TPMI indices {14, 15} with 0 values. The PMI defined by this method forms a different beam from the PMIs corresponding to TPMI indices = {0 to 5}, and also satisfies the condition that two rows have 0 values, so it may be applied to STxMP transmission. Similarly, an additional PMI may be defined by applying this method to other PMIs. For example, the same result may be obtained by applying this method to TPMI indices {16, 17}, TPMI indices {18, 19}, or TPMI indices {20, 21}.

For another example, an additional PMI may be defined by replacing the values in the 2nd and 4th rows with 0 in the PMI corresponding to the TPMI index {14, 15}. An additional PMI may be defined by replacing the values in the 1st and 3rd rows with 0 in the PMI corresponding to the TPMI index { 16, 17}. An additional PMI may be defined by replacing the values in the 1st and 4th rows with 0 in the PMI corresponding to the TPMI index {18, 19}. An additional PMI may be defined by replacing the values in the 2nd and 3rd rows with 0 in the PMI corresponding to the TPMI index {20, 21}. In this way, in addition to the PMIs corresponding to the TPMI index = {0 to 5}, PMIs corresponding to the TPMI index = { 14 to 21} may be additionally utilized.

Additionally or alternatively, the set of available PMIs for each panel may be determined/selected/restricted, considering the different characteristics of the digital ports used in the two panels, as illustrated in FIG. 8 (particularly, FIG. 8(b)).

For example, if a PMI in which the values in the second and fourth rows are replaced with 0 values is selected/indicated for a first panel (e.g., Panel 0), a PMI in which the values in the first and third rows are replaced with 0 values shall be selected/indicated for a second panel (e.g., Panel 1). Conversely, if a PMI in which the values in the first and third rows are replaced with 0 values is selected/indicated for a first panel (e.g., Panel 0), a PMI in which the values in the second and fourth rows are replaced with 0 values shall be selected/indicated for a second panel (e.g., Panel 1).

For another example, if a PMI is selected/indicated for the first panel (e.g., Panel 0) in which the values in the 1st row and the 4th row are replaced with 0 values, a PMI shall be selected/indicated for the second panel (e.g., Panel 1) in which the values in the 2nd row and the 3rd row are replaced with 0 values. Conversely, if a PMI is selected/indicated for the first panel (e.g., Panel 0) in which the values in the 2nd row and the 3rd row are replaced with 0 values, a PMI shall be selected/indicated for the second panel (e.g., Panel 1) in which the values in the 1st row and the 4th row are replaced with 0 values.

Regarding the method of defining additional PMI as described above, if the values in two out of four rows are replaced with 0, the power normalization of the corresponding PMI needs to be changed. For example, in the case of the existing PMI, the norm of the PMI matrix is normalized to 1, and to maintain this, the additional PMI needs to be normalized to 1 by multiplying the value by 1/2 instead of the existing $1/(2\sqrt{2})$ .

Embodiment 1-2

This embodiment relates to a method for indicating and applying a PMI when a UE has two (shared) digital ports and a 2-port SRS resource is configured for each panel.

In the aforementioned operation, when STxMP transmission is indicated, since each panel may only use one digital port out of two digital ports, the UE shall use only the PMI for which one antenna port has a zero value among the 2-Tx PMIs (i.e., PMIs for 2-port transmission) for each panel. In other words, only a PMI vector/matrix with one row having a 0 value needs to be used.

For example, if the transmission rank of a specific panel is 1, the PMI may be configured/indicated for that panel using a rank 1 codebook.

Table 8 illustrates a 2-Tx codebook for transmission rank 1.

[Table 8]

| TPMI index | W (ordered from left to right in increasing order of TPMI index) | | | | | | | |
|---|---|---|---|---|---|---|---|---|
| 0 - 5 | $\frac{1}{\sqrt{2}}\begin{bmatrix}1\\0\end{bmatrix}$ | $\frac{1}{\sqrt{2}}\begin{bmatrix}0\\1\end{bmatrix}$ | $\frac{1}{\sqrt{2}}\begin{bmatrix}1\\1\end{bmatrix}$ | $\frac{1}{\sqrt{2}}\begin{bmatrix}1\\-1\end{bmatrix}$ | $\frac{1}{\sqrt{2}}\begin{bmatrix}1\\j\end{bmatrix}$ | $\frac{1}{\sqrt{2}}\begin{bmatrix}1\\-j\end{bmatrix}$ | - | - |

Referring to Table 8, given the aforementioned condition, i.e., a PMI vector/matrix with one row equal to 0, the available TPMI indices may be restricted to {0, 1}. That is, the available PMI set may be non-coherent PMIs corresponding to TPMI index 0 and TPMI index 1.

Additionally or alternatively, as illustrated in FIG. 8 (particularly, FIG. 8(b)), the available PMI set for each panel may be determined/selected/restricted considering the different characteristics of the digital ports used in the two panels.

For example, if a PMI corresponding to TPMI index {0} is selected/indicated for a first panel (e.g., Panel 0), a PMI corresponding to TPMI index {1} shall be selected/indicated for a second panel (e.g., Panel 1). Conversely, if a PMI corresponding to TPMI index {1} is selected/indicated for a first panel (e.g., Panel 0), a PMI corresponding to TPMI index {0} shall be selected/indicated for a second panel (e.g., Panel 1).

In this regard, since each panel utilizes only one digital port, only Rank 1-based transmission may be possible for each panel (i.e., only Rank 1-based transmission may be configured for each SRS resource set).

With respect to the methods proposed in this embodiment, the UE may report information for which PMI(s) to use (i.e., information for the available PMI set) to the base station, and the base station may indicate a PMI only within the corresponding PMI(s) (i.e., the available PMI set).

Through the aforementioned operation, only a subset of predefined PMIs may be used for STxMP transmission, thereby reducing the size of the PMI field (i.e., PMI payload) within the DCI. For example, if only four 4-port PMIs out of a total of 16 4-port PMIs are available for STxMP transmission, the number of bits for PMI indication for the corresponding panel, i.e., the corresponding SRS resource set, may be reduced from 4 bits to 2 bits.

Additionally or alternatively, as another method for solving the problem in the aforementioned embodiment 1-1, a method of using a 4-Tx codebook (i.e., a 4-port-based codebook) for STRP transmission and a 2-Tx codebook (i.e., a 2-port-based codebook) for STxMP transmission may be applied.

For example, even if a 4-port SRS resource is indicated through the SRI field, a PMI corresponding to a 2-port based codebook may be indicated in the case of STxMP transmission. In this case, which two ports among the four ports for SRS transmission are used to apply the 2-port based codebook may be determined by a specific rule, or may be preset/defined by the base station to the terminal (or by the UE to the base station). For example, with respect to a specific rule, the first SRS port and the third SRS port may be used for one SRS resource set (e.g., SRS resource set 0), and the second SRS port and the fourth SRS port may be used for another SRS resource set (e.g., SRS resource set 1). Alternatively, the first SRS port and the second SRS port may be used for one SRS resource set (e.g., SRS resource set 0), and the third SRS port and the fourth SRS port may be used for another SRS resource set (e.g., SRS resource set 1).

The method may be applied in the same/similar manner to embodiment 1-2. That is, when 2-port SRS resources are configured/indicated, a 2-Tx codebook (i.e., a 2-port based codebook) may be used for STRP transmission, and a 4-Tx codebook (i.e., a 4-port based codebook) may be used for STxMP transmission. In this regard, the 1-Tx codebook, i.e., the 1-port based codebook, may be fixed to [1].

With respect to the methods proposed in this embodiment, the available PMI set (e.g., PMI subset) to the UE for STRP transmission and the available PMI set to the UE for STxMP transmission may be different. Therefore, the UE may be configured/defined to report codebook coherency capability information applied to STRP transmission and codebook coherency capability information applied to STxMP transmission separately. For example, the codebook coherency capability information may be coherency information of a codebook related to PUSCH transmission (e.g., a combination of non-coherent / partial coherent / full coherent). Specifically, when transmitting STxMP, the UE may separately report full/partial/non-coherent capability information for each panel / TRP / SRS resource (set) / PMI. This method may be suitable for a case where multiple panels have different implementations/capabilities, i.e., an asymmetric panel implementation.

For example, a UE considered in the present disclosure (i.e., a UE that supports a method in which M panels share N ports (e.g., digital ports)) may report full/partial/non-coherent capability as capability information for STRP transmission (i.e., non-STxMP transmission), and may report partial/non-coherent capability as capability information for STxMP transmission. Additionally, during STxMP transmission, depending on the transmission rank of each panel, partial/non-coherent capability may be applied in rank 1, and non-coherent capability may be applied in rank 2. That is, the capability information reported by the terminal for each rank may be applied as is, or a subset of the capability information may be applied. Alternatively, during STxMP transmission, the UE may report partial/non-coherent capability, but may also report coherency information by distinguishing it for each rank.

For another example, if a UE supports a scheme where each panel has an independent port (e.g., digital port) instead of a scheme where M panels share N ports (e.g., digital ports) (i.e., a shared digital port structure), the UE may report full/partial/non-coherent capability as capability information for STRP transmission (i.e., non-STxMP transmission) and full partial/non-coherent capability as capability information for STxMP transmission.

Additionally, with respect to UL codebook subset restriction (CBSR), the base station may separately configure/indicate the UE (taking into account the capability information of the UE described above) CBSR information for STRP transmission (i.e., non-STxMP transmission) and CBSR information (for each panel) for STxMP transmission. For example, for the UE considered in the present disclosure (i.e., the UE supporting a method in which M panels share N ports (e.g., digital ports)), the base station may set a full-partial-non-coherent TPMI as the CBSR information for STRP transmission (i.e., non-STxMP transmission) and a partial-non-coherent TPMI as the CBSR information for STxMP transmission. Additionally, for STxMP transmission, a partial-non-coherent TPMI may be set in rank 1, and a non-coherent TMPI may be set in rank 2.

Embodiment 2

This embodiment considers a method of applying a full power transmission mode (full power Tx mode) when a UE supports a method in which M panels share N ports (e.g., digital ports) (i.e., a shared digital port structure).

With respect to a general full power transmission mode, either full power Tx mode 1 (hereinafter referred to as the first mode) or full power Tx mode 2 (hereinafter referred to as the second mode) may be set for the UE. Here, the first mode may be a mode in which the UE reports/informs to the base station information for a coherency TPMI that may be supported beyond its capability information in order to support full power transmission, even if it does not fall within the coherency TPMI that the UE has reported as its capability information. The second mode may be a mode in which the UE reports/informs to the base station information for a TPMI that may support full power transmission among the TPMIs that the UE has reported as its capability information.

Hereinafter, one or more of the methods for setting/applying the first mode or the second mode described above (hereinafter, Examples 2-1 to 2-3) may be applied to the terminal considered in the present disclosure.

Embodiment 2-1

A rule may be defined whereby the base station does not configure the first mode for the corresponding UE.

This may be because all PMIs added in the first mode transmit PUSCHs using all antenna ports (i.e., SRS ports). In other words, PMIs added in the first mode may be suitable for a structure with independent digital ports for each panel, rather than a shared digital port structure.

Embodiment 2-2

The base station may set the first mode for the corresponding UE, but a new PMI for the first mode, rather than the existing PMI for the first mode, may be additionally defined.

For example, for a 4-port non-coherent PMI based on rank 1, a method may be considered of additionally defining and utilizing a PMI (e.g., [1100]T, [1 0 1 0]T, [010 1]T, [0 01 1]T) in which two rows have zero values and the remaining two rows have non-zero values.

Embodiment 2-3

The base station may set the second mode for the corresponding UE.

For clarity of explanation, the four shared digital ports illustrated in FIG. 8 are sequentially named digital ports 0, 1, 2, and 3. Additionally, it is assumed that the 4-port SRS resource configured in SRS resource set 0 corresponding to Panel 0 is transmitted using digital ports 0, 1, 2, and 3, and the 4-port SRS resource configured in SRS resource set 1 corresponding to Panel 1 is transmitted using digital ports 0, 1, 2, and 3.

Additionally, with respect to the method described in this embodiment, in the case of STRP transmission, all of digital ports 0, 1, 2, and 3 may be used by Panel 0, or all of digital ports 0, 1, 2, and 3 may be used by Panel 1. On the other hand, in the case of STxMP transmission, it is assumed that digital ports 0, 1 are used by Panel 0, and digital ports 2, 3 are used by Panel 1.

Additionally, with respect to the method described in this embodiment, the maximum transmission power limit (max Tx power limit) of the UE is defined differently depending on the power class of the UE (UE power class), and for the convenience of explanation, 23 dBm is assumed as the power limit. That is, whether full power transmission is performed as described in the present disclosure may be determined based on 23 dBm.

Considering the above assumptions, only some of the pre-defined PMIs are capable of full power transmission depending on the combination of power amplifiers (PAs) of each digital port.

For example, Table 9 illustrates PA combinations associated with digital ports 0, 1, 2, and 3.

[Table 9]

|  | Digital port 0 | Digital port 1 | Digital port 2 | Digital port 3 |
|---|---|---|---|---|
| PA Combination 1 | 17 dBm | 17 dBm | 17 dBm | 17 dBm |
| PA Combination 2 | 20 dBm | 17 dBm | 20 dBm | 17 dBm |
| PA Combination 3 | 23 dBm | 17 dBm | 23 dBm | 17 dBm |
| PA Combination 4 | 20 dBm | 20 dBm | 20 dBm | 20 dBm |
| PA Combination 5 | 23 dBm | 20 dBm | 23 dBm | 20 dBm |
| PA Combination 6 | 23 dBm | 23 dBm | 23 dBm | 23 dBm |

Referring to Table 9, in the case of PA combination 1, since two digital ports may be used for STxMP transmission, the maximum transmission power of one panel may be 20 dBm, and since all digital ports may be used for STRP transmission, the maximum transmission power of one panel may be 23 dBm.

For UEs supporting STxMP, depending on the implementation, either a per panel max tx power limit (i.e., transmission possible up to 23 dBm per panel) or an across panel max tx power limit (i.e., the sum of the transmission power of two panels may be up to 23 dBm) may be applied. In this case, for PA combination 1, since the sum of the maximum outputs of all digital ports is 23 dBm (= 17 dBm + 17 dBm + 17 dBm + 17 dBm), the across panel max tx power limit may be applied. On the other hand, for PA combinations 2, 3, 4, 5, and 6, either an across panel max tx power limit or a per panel max tx power limit may be applied because the sum of the maximum outputs of all digital ports exceeds 23 dBm.

Below, for each PA combination, the PMI that may be transmitted at full power (i.e., 23 dBm transmission power) on each panel (i.e., each SRS resource set) during STxMP transmission is described.

For PA combination 1, the maximum power of one panel during STxMP transmission is 20 dBm (= 17 dBm + 17 dBm), so there is no PMI that may be transmitted at full power on each panel side.

For PA combination 2, the maximum power of one panel during STxMP transmission is 21.77 dBm (= 20 dBm + 17 dBm), so there is no PMI that may be transmitted at full power on each panel side.

For PA combination 3, the maximum power of one panel during STxMP transmission is 24.96 dBm (=23 dBm + 17 dBm). Therefore, the PMI that may be transmitted at full power on each panel side may be as follows. For example, the PMI that may be transmitted at full power on Panel 0 can include PMI where any two rows (e.g., the 1st row and the 2nd row) have non-zero values and the remaining rows have zero values, or PMI where any one row (e.g., the 1st row) has non-zero values and the remaining rows have zero values. At this time, the PMI that may be transmitted at full power in Panel 1 may include PMI where any two rows (e.g., the third and fourth rows) are non-zero values and the remaining rows are zero values, or PMI where any one row (e.g., the third row) is non-zero values and the remaining rows are zero values.

For PA combination 4, the maximum power of one panel during STxMP transmission is 23 dBm (= 20 dBm + 20 dBm). Therefore, the PMI that may be transmitted at full power on each panel side may be as follows. For example, in Panel 0, the PMI that may be transmitted at full power may include PMIs that are non-zero values for any two rows (e.g., the 1st and 2nd rows) and zero values for the remaining rows. At this time, in Panel 1, the PMI that may be transmitted at full power can include PMIs that are non-zero values for any two rows (e.g., the 3rd and 4th rows) and zero values for the remaining rows.

For PA combination 5, the PMI that may be transmitted at full power is the same as that of PA combination 3.

For PA combination 6, the PMI that may be transmitted at full power on each panel side may be as follows. For example, the PMI that may be transmitted at full power on Panel 0 can include PMI where any two rows (e.g., the first and second rows) have non-zero values and the remaining rows have zero values, PMI where any one row (e.g., the first row) has non-zero values and the remaining rows have zero values, PMI where any one row (e.g., the second row) has non-zero values and the remaining rows have zero values. At this time, the PMI that may be transmitted at full power in Panel 1 may include PMI where any two rows (e.g., the 3rd and 4th rows) are non-zero values and the remaining rows are 0 values, PMI where any one row (e.g., the 3rd row) is non-zero values and the remaining rows are 0 values, PMI where any one row (e.g., the 4th row) is non-zero values and the remaining rows are 0 values.

With respect to the full power transmission method described in this embodiment, in a structure where M panels share N ports (e.g., digital ports) (i.e., a structure with shared digital ports), in the case of the second mode, the PMI set that may support full power mode/transmission during STRP transmission and the PMI set that may support full power mode/transmission during STxMP transmission may be different from each other. Therefore, the UE may need to distinguish the PMI sets and report them to the base station.

Additionally or alternatively, even in the case of STxMP transmission, the PMI set that may be supported for full power mode/transmission may be different depending on whether the UE supports a structure in which M panels share N ports (e.g., digital ports) (i.e., a structure with shared digital ports) or a structure in which each panel has an independent digital port (i.e., a structure with per-panel digital ports). Therefore, the UE may need to distinguish the PMI set and report it to the base station.

Additionally or alternatively, the UE may report information on whether it is capable of operating in the first mode and the second mode related to full power transmission, as capability information of the UE, by distinguishing between non-STxMP transmission (i.e., STRP transmission, single panel transmission) and STxMP transmission. More specifically, the capability information may be defined per panel in the case of STxMP transmission. For example, the UE considered in the present disclosure (i.e., a UE that supports a scheme in which M panels share N ports (e.g., digital ports)) may be capable of operating in the first mode in the case of non-STxMP transmission. On the other hand, in the case of STxMP transmission, the UE may not be able to operate in the first mode because it must perform PUSCH transmission using only some ports of a 4-port SRS resource.

In this regard, the base station may set a full power transmission mode to be applied to non-STxMP transmission and a full power transmission mode to be applied to STxMP transmission (taking into account the capability information of the UE described above) to the UE.

In the case of a PMI capable of supporting full power transmission as described above in the present disclosure, a PUSCH power scaling factor may be applied by replacing "# of non-zero PUSCH ports / max # of SRS port supported by UE" with '1'. Here, "# of non-zero PUSCH ports" represents the number of non-zero PUSCH ports, and "max # of SRS port supported by UE" represents the maximum number of SRS ports supported by the UE. On the other hand, in the case of a PMI that does not support full power transmission, the PUSCH power scaling factor may be applied as "# of non-zero PUSCH ports / max # of SRS port supported by UE," and scaling may be applied using "# of non-zero PUSCH ports" and "max # of SRS port supported by UE" applied to each panel.

Additionally or alternatively, in relation to the full power transmission described above in the present disclosure, to support the second mode, SRS resources with different numbers of ports may be configured in one panel, i.e., one SRS resource set. In this case, full power transmission may be possible by selecting one SRS resource through the SRI field.

For example, in addition to a 4-port SRS resource in SRS resource set 0, a 1-port SRS resource connected to both digital ports 0 and 1 may be configured, and full power transmission may be performed/supported through the corresponding SRS port in Panel 0. As a specific example, in the case of PA combination 4 in Table 9, the 1-port SRS resource configured in this way may be capable of transmitting up to 23 dBm. In another example, in addition to a 4-port SRS resource in SRS resource set 0, a 2-port SRS resource connected to both digital ports 0 and 1 may be configured. In this case, SRS port 0 may be connected to both digital ports 0 and 1, and SRS port 1 may not be connected to a digital port. If a precoder [1, 0] is applied through the corresponding SRS port in Panel 0, full power transmission may be performed/supported. As a specific example, for PA combination 4 in Table 9, the 2-port SRS resource configured in this way can transmit up to 23 dBm.

Embodiment 3

This embodiment considers a case where a UE supports a method in which M panels share N ports (e.g., digital ports) (i.e., a shared digital port structure), and relates to a PMI indication and application method based on different numbers of SRS ports.

In the case of the aforementioned embodiment 1, it is assumed that the number of SRS ports to which PMI is applied is the same for STRP transmission and STxMP transmission. Based on this, in the case of STxMP transmission, only PMIs to which a value of 0 is applied to some of the SRS ports, i.e., some of the rows constituting the PMI vector/matrix, may be included in the PMI set available to the UE.

In contrast, this embodiment describes a method for performing operations similar to those described in Embodiment 1 by setting the number of ports of SRS resources used for STRP transmission differently from the number of ports of SRS resources used for STxMP transmission.

For clarity of explanation, this embodiment separately describes a case where a UE has four (shared) digital ports (hereinafter, Embodiment 3-1) and a case where a UE has two (shared) digital ports (hereinafter, Embodiment 3-2). However, this is merely an example, and the proposed method applied in the present disclosure is the same/similar.

Additionally, the method described in the present disclosure may be extended and applied to UEs having different numbers of (shared) digital ports.

Embodiment 3-1

This embodiment relates to a method for indicating and applying PMI when a UE has four (shared) digital ports.

For example, for each of SRS resource set 0 and SRS resource set 1, 4-port SRS resource(s) for STRP transmission may be configured, and 2-port SRS resource(s) for STxMP transmission may be configured. At this time, the 2-port SRS resource configured in SRS resource set 0 may use two of the four digital ports, and the 2-port SRS resource configured in SRS resource set 1 may use the remaining two of the four digital ports. The 4-port SRS resource configured in SRS resource set 0 and SRS resource set 1 may use all four digital ports.

In this regard, for STRP transmission, the base station may indicate a 4-port SRS resource in SRS resource set 0 or SRS resource set 1 through the SRI field, and indicate a 4-port-based PMI to be applied to the corresponding SRS resource set through the TPMI field.

In contrast, for STxMP transmission, the base station may indicate a 2-port SRS resource in SRS resource set 0 and SRS resource set 1, respectively (using two SRI fields). Additionally, the base station may indicate a 2-port-based PMI to be applied to SRS resource set 0 and SRS resource set 1, respectively, through two TPMI fields. That is, since the base station indicates a reduced number of SRS ports by the number of digital ports per panel used for STxMP transmission (i.e., 2), the UE may use the PMI corresponding to the corresponding number of SRS ports.

Embodiment 3-2

This embodiment relates to a method for indicating and applying PMI when a UE has two (shared) digital ports.

For example, for each of SRS resource set 0 and SRS resource set 1, 2-port SRS resource(s) for STRP transmission may be configured, and 1-port SRS resource(s) for STxMP transmission may be configured. At this time, the 1-port SRS resource configured in SRS resource set 0 may use one of the two digital ports, and the 1-port SRS resource configured in SRS resource set 1 may use the other one of the two digital ports. The 2-port SRS resources configured in SRS resource set 0 and SRS resource set 1 may use both digital ports.

In this regard, for STRP transmission, the base station may indicate a 2-port SRS resource in SRS resource set 0 or SRS resource set 1 through the SRI field, and indicate a 2-port-based PMI to be applied to the corresponding SRS resource set through the TPMI field.

In contrast, for STxMP transmission, the base station may indicate a 1-port SRS resource in SRS resource set 0 and SRS resource set 1, respectively (using two SRI fields). Additionally, the base station may indicate a 1-port-based PMI to be applied to SRS resource set 0 and SRS resource set 1, respectively, through two TPMI fields. That is, since the base station indicates a reduced number of SRS ports by the number of digital ports per panel (i.e., 1) used for STxMP transmission, the UE may use the PMI corresponding to the corresponding number of SRS ports.

Additionally, with respect to the method proposed in the present embodiment, the UE may report information for the (maximum) number of SRS ports to the base station as capability information of the UE by distinguishing between the cases of non-STxMP transmission (i.e., STRP transmission, single panel transmission) and STxMP transmission. For example, in the case of the UE considered in the present disclosure (i.e., a UE supporting a structure in which M panels share N ports (e.g., digital ports), i.e., a shared digital port structure), the UE may support up to 4-port SRS using all 4 digital ports for non-STxMP transmission, but may support up to 2-port SRS using 2 digital ports for STxMP transmission. More specifically, the capability information may be defined for each panel in the case of STxMP transmission.

In this regard, the base station may distinguish between SRS resources to be applied in non-STxMP transmission (e.g., 4-port SRS resources) and SRS resources to be applied in STxMP transmission (e.g., 2-port SRS resources) and set them for the UE (taking into account the capability information of the UE described above).

The embodiments of the present disclosure are distinguished only for the sake of clarity of explanation, and the configuration of one embodiment may be applied in combination/combination/replacement with the configuration of another embodiment.

Additionally, information regarding whether the parameters, information, and proposed methods described in the embodiments of the present disclosure are applicable may be configured/indicated to the UE by the base station, transmitted/reported by the UE to the base station, or set to predefined/fixed values.

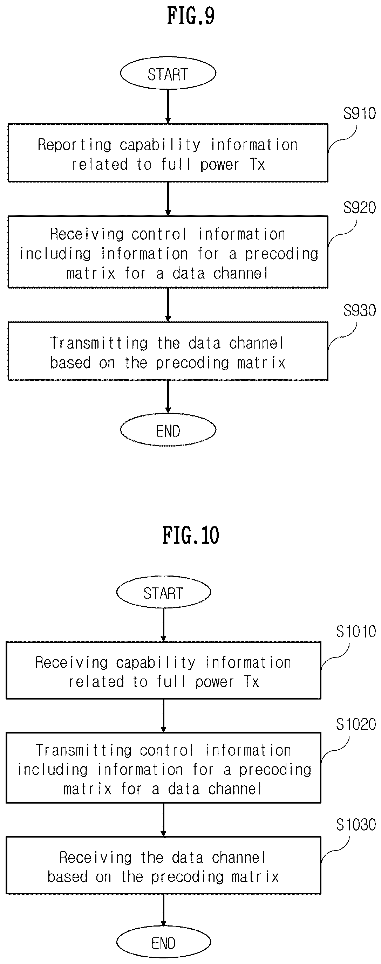

Hereinafter, the operations of the UE and the base station according to the embodiments of the present disclosure described above will be described with reference to FIGS. 9 and 10.

FIG. 9 is a diagram illustrating the operation of a user equipment for a method for performing uplink transmission according to an embodiment of the present disclosure.

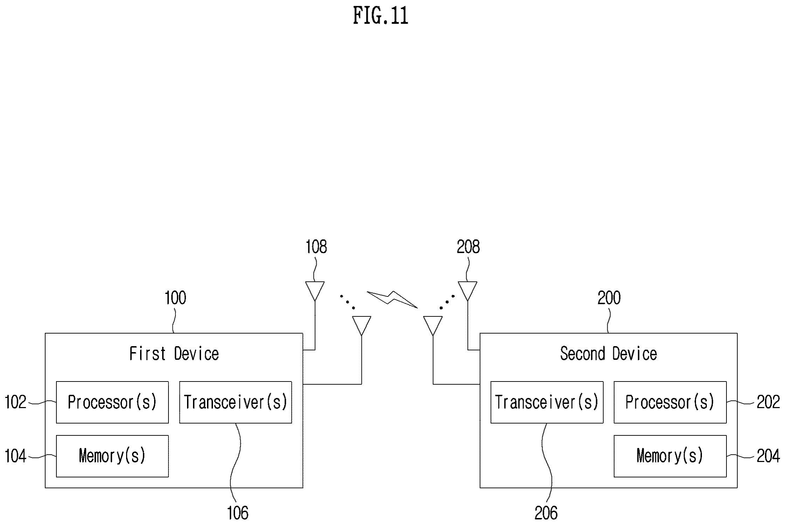

FIG. 9 illustrates an operation of a UE based on the previously proposed methods (e.g., any one of Embodiments 1 to 3 and detailed embodiments thereof, or a combination of one or more (detailed) embodiments). The example of FIG. 9 is for convenience of explanation and does not limit the scope of the present disclosure. Some step(s) illustrated in FIG. 9 may be omitted depending on the situation and/or setting. In addition, the UE in FIG. 9 is only an example and may be implemented as a device illustrated in FIG. 11 below. For example, the processor (102/202) of FIG. 11 may control the transceiver (106/206) to transmit and receive channels/signals/data/information, etc., and may also control the transceiver (106/206) to store the channels/signals/data/information to be transmitted or received in the memory (104/204).

In addition, the operation of FIG. 9 may be processed by one or more processors (102, 202) of FIG. 11, and the operation of FIG. 9 may be stored in a memory (e.g., one or more memories (104, 204) of FIG. 11) in the form of a command/program (e.g., an instruction, an executable code) for driving at least one processor (e.g., 102, 202) of FIG. 11.

In step S910, the UE may report capability information related to full power transmission to the base station.

In this regard, when reporting the capability information, the UE may separately report information for the STRP transmission scheme (i.e., non-STxMP transmission, single panel transmission, etc.) and information for the STxMP transmission scheme.

For example, the capability information may include information for a first precoding matrix set for full power transmission of a data channel (e.g., PUSCH) and information for a second precoding matrix set. In this case, the first precoding matrix set may be related to a first uplink transmission scheme (e.g., STRP transmission scheme) based on one sounding reference signal (SRS) resource set, and the second precoding matrix set may be related to a second uplink transmission scheme (e.g., STxMP transmission scheme) based on at least two SRS resource sets.

In step S920, the UE may receive control information (e.g., DCI) including information (e.g., PMI by TPMI field) regarding at least one precoding matrix for a data channel (e.g., PUSCH). Thereafter, in step S930, the UE may transmit the data channel based on the at least one precoding matrix.

For example, the control information may further include indication information indicating a first uplink transmission method or a second uplink transmission method. If the indication information indicates the first uplink transmission method and the data channel is transmitted with full power transmission, one precoding matrix indicated by the control information may be included in the first precoding matrix set. Alternatively, if the indication information indicates the second uplink transmission method and the data channel is transmitted with full power transmission, at least two precoding matrices indicated by the control information may be included in the second precoding matrix set.

As described above in the present disclosure, in the case of a UE supporting a structure in which M panels share N ports (e.g., digital ports), i.e., a shared digital port structure, a rule may be newly defined in which settings for pre-defined operation modes (e.g., full power mode 1, full power mode 2) for full power transmission are partially restricted.

For example, if a UE supports a scheme in which M SRS resource sets (i.e., M panels) share N ports, for the full power transmission, the first operation mode (e.g., full power mode 1) and the second operation mode (e.g., full power mode 2) pre-defined, the first operation mode and the second operation mode may be defined to be configurable to the UE by the base station for the first uplink transmission scheme. On the other hand, for the second uplink transmission scheme, only the second operation mode may be defined to be configurable to the UE by the base station.

In this regard, when the UE is configured to a specific operation mode (e.g., full power mode 1) among the pre-defined operation modes for the full power transmission, a precoding matrix additionally available to the UE for the specific operation mode may be configured differently depending on whether it is based on the first uplink transmission method or the second uplink transmission method. For example, the precoding matrix additionally available to the UE may mean a precoding matrix additionally available for full power transmission among the precoding matrices that the UE has not reported to the base station as available.

Additionally or alternatively, for a precoding matrix that does not support the full power transmission among the precoding matrices associated with the second uplink transmission scheme, a power scaling factor for transmission of a data channel (e.g., PUSCH) may correspond to a value obtained by dividing the number of non-zero data channel ports by the maximum number of SRS ports supported by the terminal. In this case, when at least two SRS resource sets are configured for the second uplink transmission scheme, the power scaling factor for transmission of the data channel may be calculated for each SRS resource set (i.e., for each panel).

Additionally, in the case of a UE supporting a shared digital port structure, i.e., a structure in which M panels share N ports (e.g., digital ports) as described above in the present disclosure, a rule may be newly defined that restricts the use of only some of the pre-defined precoding matrices for transmission based on a plurality of SRS resource sets (e.g., STxMP transmission).

For example, when the first SRS resource set and the second SRS resource set for the aforementioned second uplink transmission method are indicated by control information, the index of a row having a non-zero value among the rows of the precoding matrix for the first SRS resource set may be defined/configured/indicated so as not to overlap with the index of a row having a non-zero value among the rows of the precoding matrix for the second SRS resource set.

Additionally, when considering one of the pre-defined operation modes for full power transmission (e.g., full power mode 2), the first precoding matrix set described above may be included in a third precoding matrix set available to the UE for the first uplink transmission scheme, and the second precoding matrix set may be included in a fourth precoding matrix set available to the UE for the second uplink transmission scheme.

In this regard, when the first SRS resource set and the second SRS resource set are set for the second uplink transmission method, for the fourth precoding matrix set, the index of a row having a non-zero value among the rows of the precoding matrix for the first SRS resource set may be defined/configured/indicated so as not to overlap with the index of a row having a non-zero value among the rows of the precoding matrix for the second SRS resource set. Additionally or alternatively, the UE may report information for the third precoding matrix set and information for the fourth precoding matrix set to the base station as capability information of the UE.

Additionally or alternatively, if one or more operation modes (e.g., full power mode 1, 2, etc.) are pre-defined for full power transmission, the UE may report to the base station, as capability information of the UE, information for whether the UE supports one or more operation modes for each of the first uplink transmission method and the second uplink transmission method.

Additionally or alternatively, the UE may report first codebook coherency capability information for the first uplink transmission scheme and second codebook coherency capability information for the second uplink transmission scheme to the base station as capability information of the terminal. Here, the second codebook coherency capability information may include rank-specific coherency capability information for each SRS resource set related to the second uplink transmission scheme. In this regard, when the UE receives CBSR (codebook subset restriction) related information for uplink transmission from the base station, the CBSR related information may be individually, i.e., distinctly, set for the first uplink transmission scheme and the second uplink transmission scheme described above.

Additionally or alternatively, the SRS resource set for the second uplink transmission method may be configured to include SRS resources having different numbers of ports. In this case, the control information in step S920 may include information indicating, for the corresponding SRS resource set, an SRS resource having a number of ports that support full power transmission among the SRS resources.

It should be understood that the operation of the UE in FIG. 9 and/or the configuration/indication related thereto may be specified based on the embodiments described above in the present disclosure (e.g., Embodiments 1 to 3 and detailed embodiments thereof).

FIG. 10 is a diagram illustrating the operation of a base station for a method for receiving uplink transmission according to an embodiment of the present disclosure.

FIG. 10 illustrates the operation of a base station based on the previously proposed methods (e.g., any one of Embodiments 1 to 3 and detailed embodiments thereof, or a combination of one or more (detailed) embodiments). The example of FIG. 10 is for convenience of explanation and does not limit the scope of the present disclosure. Some step(s) illustrated in FIG. 10 may be omitted depending on the situation and/or setting. In addition, the base station in FIG. 10 is only an example and may be implemented as a device illustrated in FIG. 11 below. For example, the processor (102/202) of FIG. 11 may control the transceiver (106/206) to transmit and receive channels/signals/data/information, etc., and may also control the transceiver (106/206) to store the channels/signals/data/information to be transmitted or received in the memory (104/204).

In addition, the operation of FIG. 10 may be processed by one or more processors (102, 202) of FIG. 11, and the operation of FIG. 10 may be stored in a memory (e.g., one or more memories (104, 204) of FIG. 11) in the form of a command/program (e.g., an instruction, an executable code) for driving at least one processor (e.g., 102, 202) of FIG. 11.

In step S1010, the base station may receive a report of capability information related to full power transmission from the UE.

In this regard, when reporting the capability information, the UE may separately report information for the STRP transmission scheme (i.e., non-STxMP transmission, single panel transmission, etc.) and information for the STxMP transmission scheme.

For example, the capability information may include information for a first precoding matrix set for full power transmission of a data channel (e.g., PUSCH) and information for a second precoding matrix set. In this case, the first precoding matrix set may be related to a first uplink transmission scheme (e.g., STRP transmission scheme) based on one sounding reference signal (SRS) resource set, and the second precoding matrix set may be related to a second uplink transmission scheme (e.g., STxMP transmission scheme) based on at least two SRS resource sets.

In step S1020, the base station may transmit control information (e.g., DCI) including information (e.g., PMI by TPMI field) regarding at least one precoding matrix for a data channel (e.g., PUSCH) to the UE. Thereafter, in step S1030, the base station may receive, from the UE, a data channel transmitted based on the at least one precoding matrix.

Specific details regarding the first uplink transmission scheme and the second uplink transmission scheme, related precoding matrices/precoding matrix sets, operation modes for full power transmission, SRS resource sets/SRS resources, UE capability information reporting, etc. overlap with those described in FIG. 9, and therefore, detailed descriptions thereof will be omitted.

It goes without saying that the information on the operation and/or configuration/indication of the base station in FIG. 10 may be specified based on the contents of the embodiments described in the present disclosure (e.g., embodiments 1 to 3 and detailed embodiments thereof).

General Device to which the Present Disclosure may be applied

FIG. 11 illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[INDUSTRIAL APPLICABILITY]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.  A method performed by a user equipment (UE) in a wireless communication system, the method comprising:

    reporting, to a base station, capability information related to full power transmission;
    receiving, from the base station, control information including information for at least one precoding matrix for a data channel; and
    transmitting, to the base station, the data channel based on the at least one precoding matrix,
    wherein the capability information includes information for a first precoding matrix set and information for a second precoding matrix set for full power transmission of the data channel, and
    wherein the first precoding matrix set relates to a first uplink transmission scheme based on one sounding reference signal (SRS) resource set, and the second precoding matrix set relates to a second uplink transmission scheme based on at least two SRS resource sets.

2.  The method of claim 1, wherein:

    based on a first SRS resource set and a second SRS resource set for the second uplink transmission scheme being indicated by the control information,
    an index of a row having a non-zero value among rows of a precoding matrix for the first SRS resource set is non-overlapped with an index of a row having a non-zero value among rows of a precoding matrix for the second SRS resource set.

3.  The method of claim 1, wherein:

    the control information further includes indication information for the first uplink transmission scheme or the second uplink transmission scheme,
based on the indication information indicating the first uplink transmission scheme and the data channel being transmitted with a full power transmission, one precoding matrix indicated by the control information is included in the first precoding matrix set, and
based on the indication information indicating the second uplink transmission scheme and the data channel being transmitted with a full power transmission, at least two precoding matrices indicated by the control information are included in the second precoding matrix set.

4. The method of claim 1, wherein:

based on that a scheme in which M SRS resource sets share N ports is supported by the UE,
for a first operation mode and a second operation mode pre-defined for the full power transmission,
the first operation mode and the second operation mode are defined to be configurable by the base station to the UE for the first uplink transmission scheme, and
only the second operation mode is defined to be configurable by the base station to the UE for the second uplink transmission scheme.

5. The method of claim 1, wherein:

based on that the UE is configured to a specific operation mode among pre-defined operation modes for the full power transmission,
a precoding matrix additionally available to the UE for the specific operation mode is configured differently depending on whether it is based on the first uplink transmission scheme or based on the second uplink transmission scheme.

6. The method of claim 1, wherein:

for a precoding matrix among precoding matrices related to the second uplink transmission scheme that does not support the full power transmission,
a power scaling factor for transmission of a data channel corresponds to a value obtained by dividing a number of non-zero data channel ports by a maximum number of SRS ports supported by the UE.

7. The method of claim 6, wherein:

based on that at least two SRS resource sets are set for the second uplink transmission scheme,
the power scaling factor for transmission of the data channel is calculated per SRS resource set.

8. The method of claim 1, wherein:

based on that one or more operation modes are pre-defined for the full power transmission,
the capability information further includes information for whether or not the UE supports the one or more operation modes for each of the first uplink transmission scheme and the second uplink transmission scheme.

9. The method of claim 1, wherein:
an SRS resource set for the second uplink transmission scheme is configured to include SRS resources having different numbers of ports.

10. The method of claim 9, wherein:
the control information includes information indicating an SRS resource having a number of ports supporting the full power transmission among the SRS resources for the SRS resource set.

11. The method of claim 1, wherein:

the first precoding matrix set is included in a third precoding matrix set available to the UE for the first uplink transmission scheme, and
the second precoding matrix set is included in a fourth precoding matrix set available to the UE for the second uplink transmission scheme.

**12.** The method of claim 11, wherein:

based on that a first SRS resource set and a second SRS resource set are set for the second uplink transmission scheme,
for the fourth precoding matrix set,
an index of a row having a non-zero value among rows of a precoding matrix for the first SRS resource set is non-overlapped with an index of a row having a non-zero value among rows of a precoding matrix for the second SRS resource set.

**13.** The method of claim 11, further comprising:
reporting, to the base station, information for the third precoding matrix set and information for the fourth precoding matrix set as UE capability information.

**14.** The method of claim 1, further comprising:
reporting, to the base station, first codebook coherency capability information for the first uplink transmission scheme and second codebook coherency capability information for the second uplink transmission scheme as UE capability information.

**15.** The method of claim 14, wherein:
the second codebook coherency capability information includes rank-specific coherency capability information for each SRS resource set related to the second uplink transmission scheme.

**16.** The method of claim 14, further comprising:

receiving, from the base station, information related to codebook subset restriction for uplink transmission,
wherein the information related to codebook subset restriction is configured respectively for the first uplink transmission scheme and the second uplink transmission scheme.

**17.** A user equipment (UE) in a wireless communication system, the UE comprising:

at least one transceiver; and
at least one processor coupled with the at least one transceiver,
wherein the at least one processor is configured to:

report, to a base station, capability information related to full power transmission;
receive, from the base station, control information including information for at least one precoding matrix for a data channel; and
transmit, to the base station, the data channel based on the at least one precoding matrix,
wherein the capability information includes information for a first precoding matrix set and information for a second precoding matrix set for full power transmission of the data channel, and
wherein the first precoding matrix set relates to a first uplink transmission scheme based on one sounding reference signal (SRS) resource set, and the second precoding matrix set relates to a second uplink transmission scheme based on at least two SRS resource sets.

**18.** A method performed by a base station in a wireless communication system, the method comprising:

receiving, from a user equipment, a report of capability information related to full power transmission;
transmitting, to the UE, control information including information for at least one precoding matrix for a data channel; and
receiving, from the UE, the data channel transmitted based on the at least one precoding matrix,
wherein the capability information includes information for a first precoding matrix set and information for a second precoding matrix set for full power transmission of the data channel, and
wherein the first precoding matrix set relates to a first uplink transmission scheme based on one sounding reference signal (SRS) resource set, and the second precoding matrix set relates to a second uplink transmission scheme based on at least two SRS resource sets.

**19.** A base station in a wireless communication system, the base station comprising:

at least one transceiver; and
at least one processor coupled with the at least one transceiver,
wherein the at least one processor is configured to:

receive, from a user equipment, a report of capability information related to full power transmission;
transmit, to the UE, control information including information for at least one precoding matrix for a data channel; and
receive, from the UE, the data channel transmitted based on the at least one precoding matrix,
wherein the capability information includes information for a first precoding matrix set and information for a second precoding matrix set for full power transmission of the data channel, and
wherein the first precoding matrix set relates to a first uplink transmission scheme based on one sounding reference signal (SRS) resource set, and the second precoding matrix set relates to a second uplink transmission scheme based on at least two SRS resource sets.

20. A processing device configured to control a user equipment in a wireless communication system, the processing device comprising:

one or more processors; and
one or more computer memories operatively connected to the one or more processors and storing instructions for performing a method according to any one of claims 1 to 16 based on being executed by the one or more processors.

21. At least one non-transitory computer readable medium storing one or more instructions,
wherein the one or more instructions are executed by one or more processors to control an apparatus in a wireless communication system to perform a method according to any one of claims 1 to 16.

# FIG.1

# FIG.2

Radio Frame 10ms

Subframe 1ms

| 0 | 1 | 2 | 3 | 4 | 5 | 6 | 7 | 8 | 9 |

Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
– In a resource grid, $(k, \bar{l})$
– In a resource block, $(k, l)$

$k = 0$

$l = 0$

$l = 14 \cdot 2^{\mu} - 1$

# FIG.4

# FIG.5

# FIG.6

INITIAL CELL
SEARCH

SYSTEM
INFORMATION
RECEPTION

RANDOM ACCESS PROCEDURE

GENERAL DL/UL Tx/Rx

| PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |

S601    S602    S603    S604    S605    S606    S607    S608

· DL/UL ACK/NACK
· UE CQI/PMI RI REPORT
  USING PUSCH AND PUCCH

FIG.7

(a)

(b)

EP 4 693 935 A2

FIG.8

Panel 0    Panel 1    Panel 0    Panel 1

4 shared digital ports    4 shared digital ports

(a)    (b)

## FIG.9

START

**S910**
Reporting capability information related to full power Tx

**S920**
Receiving control information including information for a precoding matrix for a data channel

**S930**
Transmitting the data channel based on the precoding matrix

END

## FIG.10

START

**S1010**
Receiving capability information related to full power Tx

**S1020**
Transmitting control information including information for a precoding matrix for a data channel

**S1030**
Receiving the data channel based on the precoding matrix

END

FIG.11

EP 4 693 935 A2